(19) Europäisches Patentamt
European Patent Office
Office européen des brevets

(11) **EP 1 892 052 B1**

(12) **EUROPEAN PATENT SPECIFICATION**

(45) Date of publication and mention
of the grant of the patent:
**06.04.2016 Bulletin 2016/14**

(51) Int Cl.:
**B23B 27/14** *(2006.01)*   **C22C 27/04** *(2006.01)*
**C22C 29/04** *(2006.01)*

(21) Application number: **06757308.9**

(22) Date of filing: **13.06.2006**

(86) International application number:
**PCT/JP2006/311873**

(87) International publication number:
**WO 2006/134944 (21.12.2006 Gazette 2006/51)**

(54) **CERMET INSERT AND CUTTING TOOL**

CERMET-EINSATZ UND SCHNEIDWERKZEUG

BÂTONNET EN CERMET ET OUTIL DE COUPE

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.06.2005 JP 2005173463**
**07.09.2005 JP 2005259169**
**07.09.2005 JP 2005259170**
**07.09.2005 JP 2005259171**
**18.10.2005 JP 2005303095**
**18.10.2005 JP 2005303096**

(43) Date of publication of application:
**27.02.2008 Bulletin 2008/09**

(73) Proprietors:
• **MITSUBISHI MATERIALS CORPORATION**
**Chiyoda-ku,**
**Tokyo 100-8117 (JP)**
• **NGK Spark Plug Co., Ltd.**
**Nagoya-shi,**
**Aichi 467-8525 (JP)**

(72) Inventors:
• **TANIUCHI, Toshiyuki c/o MITSUBISHI MATERIALS**
**Joso-shi, Ibaraki; 3002795 (JP)**

• **FUKUMURA, Masafumi c/o MITSUBISHI MATERIALS**
**Joso-shi, I baraki; 3002795 (JP)**
• **TAKAHASHI, Kei c/o MITSUBISHI MATERIALS**
**Joso-shi, Ibara ki; 3002795 (JP)**
• **SHINDO, Tomoaki c/o NGK SPARK PLUG CO., LTD.,**
**Aichi; 4 678525 (JP)**
• **KOMURA, Atsushi c/o NGK SPARK PLUG CO., LTD.,**
**Aichi; 4678525 (JP)**
• **TAKASHIMA, Hiroaki c/o NGK SPARK PLUG CO., LTD.,**
**Aichi; 4678525 (JP)**

(74) Representative: **Gille Hrabal**
**Brucknerstrasse 20**
**40593 Düsseldorf (DE)**

(56) References cited:
EP-A1- 0 537 741    JP-A- 10 110 234
JP-A- 2002 263 940    JP-A- 2004 292 842
US-A- 5 370 719    US-A- 5 460 893

## Description

TECHNICAL FIELD

The present invention relates to a cermet insert and cutting tool. More particularly, the present invention relates to a titanium carbonitride-based cermet (hereinafter referred to as TiCN-based cermet) insert, in which the binding phase of the TiCN-based cermet has superior high-temperature hardness, and as a result, demonstrates superior wear resistance and breakage resistance during high-speed cutting accompanying the generation of high levels of heat, and a cutting tool provided with this cermet insert.

The present application claims priority from Japanese Patent Application No. 2005-173463 filed on June 14, 2005, Japanese Patent Application No. 2005-259169 filed on September 7, 2005, Japanese Patent Application No. 2005-259170 filed on September 7, 2005, Japanese Patent Application No. 2005-259171 filed on September 7, 2005, Japanese Patent Application No. 2005-303095 filed on October 18, 2005, and Japanese Patent Application No. 2005-303096 filed on October 18, 2005.

BACKGROUND ART

As a type of cutting tool used in, for example, turning, inserts including TiCN-based cermet (hereinafter to be simply referred to as cutting inserts) are known in the prior art, such as, for example the published Japanese application JP 2004 292842 A

Known examples of the aforementioned cutting inserts have the compositions shown below.

(a) TiCN-based cermet in the form of a sintered body of a compact having a blended composition including in percent by mass (hereinafter "%" refers to "mass%") of:

tungsten carbide (hereinafter referred to as WC) : 20 to 30%;
one kind or two kinds of tantalum carbide (hereinafter referred to as TaC) and niobium carbide (hereinafter referred to as NbC) (hereinafter referred to as TaC/NbC): 5 to 10%;
Co: 5 to 10%;
Ni: 5 to 10%; and
titanium carbonitride (hereinafter referred to as TiCN) : 50 to 60%.

(b) The aforementioned TiCN-based cermet has a microstructure including
hard phase: 75 to 90 area%, and
binding phase: balance. Here, the surface area ratio is the value measured by observing the microstructure with a scanning electron microscope.

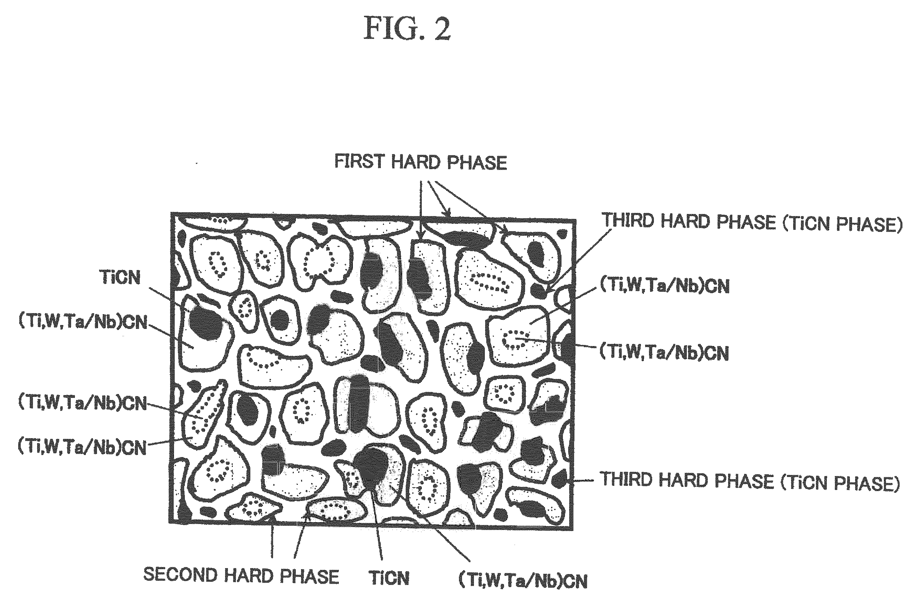

The aforementioned hard phase contains the following (1) to (3) as indicated in the schematic drawing of FIG. 2 showing the results of observing microstructure with a scanning electron microscope (magnification: 10,000-fold).

(1) First hard phase having a core-having structure in which a core portion includes a TiCN phase and a peripheral portion includes a complex carbonitride of Ti, W and one or both of Ta and Nb (hereinafter indicated as (Ti,W,Ta/Nb)CN);
(2) Second hard phase having a core-having structure in which both a core portion and a peripheral portion include (Ti,W,Ta/Nb)CN phases; and
(3) Third hard phase having a single phase structure including a TiCN phase.

The aforementioned binding phase includes a Co-Ni alloy having a composition containing, as the ratio in the binding phase and by mass%,
W: 1 to 10%,
Ni: 35 to 60%,
Ti and one kind or two kinds of Ta and Nb (to be indicated as Ta/Nb), the total amount thereof being 5% or less, and
Co as the balance.

In addition, the following indicates known examples of cutting inserts containing one kind or two or more kinds of zirconium carbide (hereinafter referred to as ZrC), vanadium carbide (hereinafter referred to as VC) and molybdenum carbide (hereinafter referred to as $MO_2C$ (hereinafter referred to as ZrC/VC/Mo$_2$C).

(a) TiCN-based cermet in the form of a sintered body of a compact having a blended composition including: in percent by mass (hereinafter "%" refers to "mass%")

WC: 20 to 30%;
TaC/NbC: 5 to 10%;
ZrC/VC/Mo$_2$C: 1 to 5%;
Co: 5 to 10%;
Ni: 5 to 10%; and
TiCN: 50 to 60%.

(b) The aforementioned TiCN-based cermet has a microstructure including
hard phase: 75 to 93 area%, and
binding phase: balance. Here, the surface area ratio is the value measured by observing the microstructure with a scanning electron microscope.

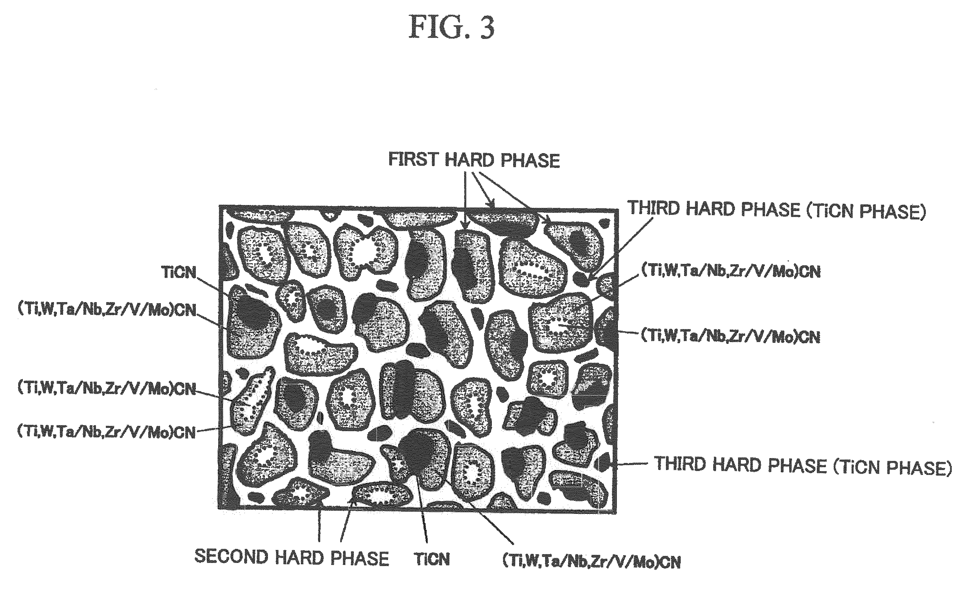

The aforementioned hard phase contains the following (1) to (3) as indicated in the schematic drawing of FIG. 3 showing the results of observing microstructure with a scanning electron microscope (magnification: 10,000-fold).

(1) First hard phase having a core-having structure in which a core portion includes a TiCN phase and a peripheral portion includes a complex carbonitride of Ti, W, one kind or two kinds of Ta and Nb, and one kind or two or more kinds of Zr, V and Mo (hereinafter indicated as (Ti,W,Ta/Nb,Zr/V/Mo)CN);
(2) Second hard phase having a core-having structure in which both a core portion and a peripheral portion include (Ti,W,Ta/Nb,Zr/V/Mo)CN phases; and
(3) Third hard phase having a single phase structure including a TiCN phase.

The aforementioned binding phase includes a Co-Ni alloy having a composition containing: as the ratio in the binding phase and by mass%,

W: 1 to 10%;
Ni: 35 to 60%;
Ti, one kind or two kinds of Ta and Nb (to be indicated as Ta/Nb), and one kind or two or more kinds of Zr, V and Mo (to be indicated as Zr/V/Mo), the total amount thereof being 5% or less; and
Co as the balance.

Moreover, a cutting insert as described above is commonly known to be produced by sintering a compact having the aforementioned blended composition under conditions consisting of the steps of the following sintering conditions (i) to (iii), and is used for continuous cutting and intermittent cutting of various types of steels and cast irons.

(i) The temperature is raised from room temperature to 1400 to 1450°C in a vacuum atmosphere of 10 Pa or less at the rate of 1 to 3°C/min.
(ii) The temperature is raised from 1400 to 1450°C to a sintering temperature of 1480 to 1560°C at the rate of 1 to 3°C/min and then holding for 0.5 to 2 hours at the aforementioned sintering temperature. This raising of the temperature and holding at the predetermined temperature are carried out in a nitrogen atmosphere of 50 to 4000 kPa.
(iii) The furnace is cooled from the aforementioned sintering temperature in a vacuum atmosphere of 10 Pa or less.

The performance of cutting apparatuses has increased dramatically in recent years, while demands being placed on cutting with respect to conservation of power, conservation of energy and reduction of costs have become increasingly severe. Accompanying these demands, cutting speeds are tending to increase. However, in the case of cutting steel or cast iron and the like at high cutting speeds of 300 m/min or more using a conventional cutting insert as described above, wear of the binding phase composed of Co-Ni-based alloy of TiCN-based cermet that composes these cutting inserts in particular is accelerated considerably. This causes the current comparatively short service life of these cutting inserts.

In addition, cermet inserts having a microstructure composed of hard phases (hard particles) and binding phase present between the hard phases are used to cut steel and the like, and various technologies have been proposed for improving the performance of these cermet inserts.

For example, Patent Document 2 proposes a TiCN-based cermet composed of an ordinary core-having structure, and more specifically, a core-having structure composed of a plurality of phases consisting of a phase in which a core portion is rich in a group 4a element such as Ti and a peripheral portion is rich in group 5a and group 6a elements such as W and Ta (black phase), and a phase in which a core portion is rich in group 5a and group 6a elements such as W and Ta (white phase), wherein strength of cermet alloy is improved by dispersing the black phase and the white phase at the optimum ratio.

However, in the technology proposed by the aforementioned Patent Document 2, although strength of cermet alloy is improved to a certain degree according to the composition of the black phase and white phase as described above, it has the problem of adequate considerations not necessarily being given to wear resistance and breakage resistance.

(Patent Document 1) Japanese Unexamined Patent Application, First Publication No. H10-110234
(Patent Document 2) Japanese Unexamined Patent Application, First Publication No. S62-170452

DISCLOSURE OF THE INVENTION

Problems to be Solved by the Invention

In consideration of the aforementioned problems, a first object of the present invention, from the viewpoint of the aforementioned Patent Document 1, is to provide a titanium carbonitride-based cermet insert having superior wear resistance during high-speed cutting.
In addition, in order to solve the problems of the aforementioned Patent Document 2, a second object of the present invention is to provide a cermet insert and a cutting tool capable of maintaining high wear resistance while realizing high breakage resistance.

Means for Solving the Problems

The inventors of the present invention, from the viewpoint of the aforementioned Patent Document 1, conducted research focusing particularly on the binding phase including Co-Ni-based alloy of the TiCN-based cermet that makes up the conventional cutting insert described in Patent Document 1 for the purpose of improving the wear resistance of this cutting insert during high-speed cutting. As a result, the research results indicated in (A) to (C) below were obtained.

(A) A W component solid-soluted in the Co-Ni-based alloy that forms the binding phase during sintering precipitates into solid solution in a peripheral portion of the hard phase, while a portion thereof further goes into solid solution in a core portion. However, in the conventional cutting insert produced under the sintering conditions described above, the ratio of W component contained in the binding phase that precipitates as a solid solution into the peripheral portion of the hard phase is relatively extremely high. Thus, the ratio of W component remaining in the binding phase is low, and the ratio of the W component in the binding phase is 1 to 10%.
(B) During the course of heating in a vacuum atmosphere to 1400 to 1450°C as described in (i) above for the aforementioned conventional sintering conditions, if alternately changing atmosphere treatment is carried out by repeatedly alternating between holding in an Ar atmosphere for a short period of time and holding in a vacuum atmosphere for a short period of time at the point the temperature has risen to 1200 to 1350°C, precipitation as solid solution of the W component from the binding phase to the peripheral portion of the hard phase during sintering is inhibited considerably. As a result, the W component is contained in the binding phase at an extremely high ratio in the binding phase of 40 to 60%.
Alternately changing atmosphere treatment is preferably carried out by alternately repeating holding for a short period of time in an Ar atmosphere by holding for 1 to 5 minutes in an Ar atmosphere of 10 to 60 kPa and holding for a short period of time in a vacuum atmosphere by holding for 5 to 20 minutes in a vacuum atmosphere of 10 Pa or less two times or more each, and more preferably 3 to 5 times each.
(C) If the W component is contained in the binding phase at an extremely high ratio in the binding phase of 40 to 60%, the high-temperature hardness of the binding phase is further improved. Thus, a cutting insert in which the binding phase of TiCN-based cermet contains W at a high ratio as described above demonstrates superior wear resistance during high-speed cutting accompanying the generation of high levels of heat.

The titanium carbonitride-based cermet insert of the present invention was invented based on the research results described above.
A first aspect of the titanium carbonitride-based cermet insert of the present invention contains a titanium carbonitride-based cermet having a microstructure including 75 to 90 area% of a hard phase and the balance as a binding phase.
The hard phase includes the first to the third hard phases indicated below.

(1) a first hard phase having a core-having structure in which a core portion includes a titanium carbonitride phase,

and a peripheral portion includes a complex carbonitride phase having Ti, W, and one kind or two kinds of Ta and Nb (hereinafter referred to as (Ti,W,Ta/Nb)CN).

(2) A second hard phase having a core-having structure in which both a core portion and a peripheral portion include (Ti,W,Ta/Nb)CN phases.

(3) A third hard phase having a single phase structure including a titanium carbonitride phase.

The binding phase contains a W-Co-Ni-based alloy having a composition including, as a ratio in the binding phase and by mass%, at least:

Co: 18 to 33%;
Ni: 20 to 35%;
Ti, and one kind or two kinds of Ta and Nb, the total amount thereof being 5% or less; and
W: 40 to 60%. This first aspect of the titanium carbonitride-based cermet insert of the present invention demonstrates superior wear resistance during high-speed cutting accompanying generation of high levels of heat.

In the first aspect of the titanium carbonitride-based cermet insert of the present invention, the titanium carbonitride-based cermet may be a sintered body of a compact having a blended composition including, by mass%, at least:

tungsten carbide: 20 to 30%;
one kind or two kinds of tantalum carbide and niobium carbide : 5 to 10%;
Co: 5 to 10%;
Ni: 5 to 10%; and
titanium carbonitride: 50 to 60%.

A second aspect of the titanium carbonitride-based cermet insert of the present invention contains a titanium carbonitride-based cermet having a microstructure including 75 to 93 area% of a hard phase and the balance as a binding phase.

The hard phase includes the first to the third hard phases indicated below.

(1) A first hard phase having a core-having structure in which a core portion includes a titanium carbonitride phase, and a peripheral portion includes a complex carbonitride phase having Ti, W, one kind or two kinds of Ta and Nb, and one kind or two or more kinds of Zr, V and Mo (to be referred to as (Ti,W,Ta/Nb,Zr/V/Mo)CN).

(2) A second hard phase having a core-having structure in which both a core portion and a peripheral portion include (Ti,W,Ta/Nb,Zr/V/Mo)CN phases.

(3) A third hard phase having a single phase structure including a titanium carbonitride phase.

The binding phase contains a W-Co-Ni-based alloy having a composition including, as a ratio in the binding phase and by mass%, at least:

Co: 18 to 33%;
Ni: 20 to 35%;
Ti, one kind or two kinds of Ta and Nb, and one kind or two or more kinds of Zr, V and Mo, the total amount thereof being 5% or less; and
W: 40 to 60%. The second aspect of the titanium carbonitride-based cermet insert of the present invention demonstrates superior wear resistance during high-speed cutting accompanying the generation of high levels of heat.

In the second aspect of the titanium carbonitride-based cermet insert of the present invention, the titanium carbonitride-based cermet may be a sintered body of a compact having a blended composition including, by mass%, at least:

tungsten carbide: 20 to 30%;
one kind or two kinds of tantalum carbide and niobium carbide: 5 to 10%;
one kind or two kinds of zirconium carbide, vanadium carbide and molybdenum carbide: 1 to 5%;
Co: 5 to 10%;
Ni: 5 to 10%; and
titanium carbonitride: 50 to 60%.

A third aspect of a cermet insert not belonging to the present invention contains a titanium carbonitride-based cermet including a sintered body containing Ti, one kind or two kinds of Ta and Nb, and W.

A total of an amount of Ti converted as carbonitride, an amount of the one kind or two kinds of Ta and Nb converted as carbide, and an amount of W converted as carbide is 70 to 95 mass% as a ratio to the entire constitution that makes up the sintered body, an amount of W converted as carbide is 20 to 35 mass% as a ratio to the entire constitution, and an amount of Co and Ni is 5 to 30 mass% as a ratio to the entire constitution.

The cermet insert has a microstructure including: a hard phase containing at least a complex carbonitride including Ti, W, and one kind or two kinds of Ta and Nb (to be referred to as (Ti,W,Ta/Nb)CN); and a binding phase including, as main components thereof, W and one kind or two kinds of Co and Ni. Among the W contained in the entire constitution, 40 to 65 mass% is contained in the hard phase while the balance is contained in the binding phase.

In the third aspect of the cermet insert not belonging to the present invention, the hard phase may further contain titanium carbonitride.

An amount of Ti converted as carbonitride may be 45 to 60 mass% as a ratio to the entire constitution, and an amount of one kind or two kinds of Ta and Nb converted as carbide may be 5 to 10 mass% as a ratio to the entire constitution.

These numerical ranges are exemplary of the preferable contents of Ti, Ta and/or Nb, and if Ti is within this range, wear resistance becomes higher, while if Nb and/or Ta are within this range, thermal shock resistance becomes higher.

The hard phase may include one kind or two kinds of:

(1) a first hard phase having a core-having structure in which a core portion includes titanium carbonitride and a peripheral portion includes a (Ti,W,Ta/Nb)CN phase; and
(2) a second hard phase having a core-having structure in which both a core portion and a peripheral portion include (Ti,W,Ta/Nb)CN phases.

The hard phase may further include:

(3) a third hard phase having a single phase structure including a titanium carbonitride phase.

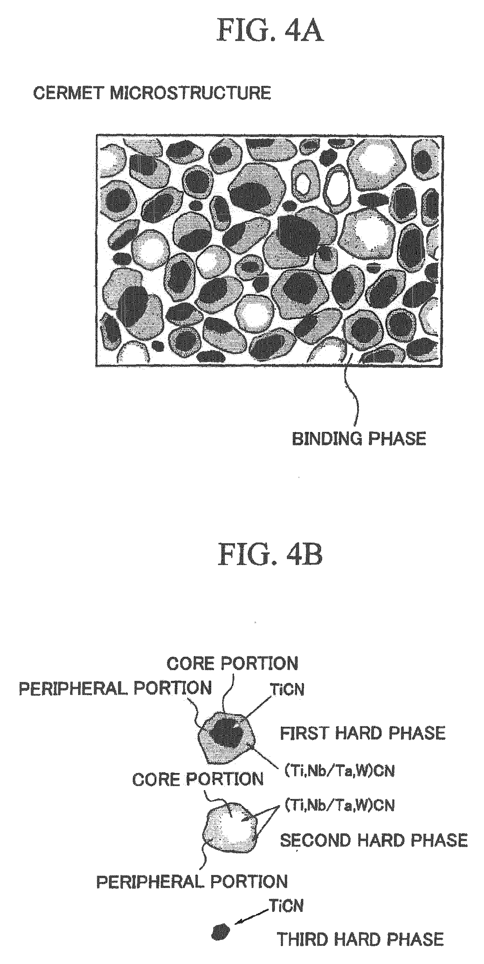

As shown in FIGS. 4A and 4B, by adopting a constitution selected from the three types of hard phases described above for the hard phase, insert hardness can be enhanced and wear resistance can be improved.

Moreover, Mo may be contained in one or both of the hard phase and the binding phase.

Since wettability of the hard phase and the binding phase is improved as a result of containing Mo, sintering can be improved. This Mo is contained in the peripheral portion of the first hard phase, the second hard phase, and the binding phase. Furthermore, Mo is preferably contained at, for example, 1 to 5 mass% converted as carbide ($Mo_2C$) based on the total weight of the insert.

The binding phase may also contain W at 40 to 60 mass% as a ratio in the binding phase.

In the case of containing W of 40 to 60 mass% as a ratio in the binding phase, the high-temperature hardness of the binding phase is improved. As a result, superior wear resistance can be demonstrated during, for example, high-speed cutting accompanying the generation of high levels of heat.

The cutting tool of the present invention includes a holder and the cermet insert of the present invention held and fixed by the holder.

Since the cutting tool of the present invention has the aforementioned cermet insert provided in the holder, superior wear resistance and breakage resistance can be realized.

Effects of the Invention

In the first and the second aspects of the titanium carbonitride-based cermet insert of the present invention (also referred to as a cutting insert or cutting tip), the binding phase of the TiCN-based cermet that makes up the cutting insert contains a W component of 40 to 60% as a result of carrying out alternately changing atmosphere treatment in the heating process during sintering. As a result, since high-temperature hardness of the binding phase is dramatically improved, superior wear resistance is demonstrated during high-speed cutting accompanying the generation of high levels of heat.

In the third aspect of the cermet insert not belonging to the present invention, the ratios of the hard phase and the binding phase are optimized by defining the total amount of Ti, Ta/Nb and W; thereby allowing the obtaining of superior wear resistance and breakage resistance. Moreover, since 40 to 65 mass% of W is contained in the hard phase and the balance is contained in the binding phase, both high wear resistance and breakage resistance can be realized.

Since the cutting tool of the present invention includes the aforementioned cermet insert in the holder, superior wear resistance and breakage resistance can be realized.

BRIEF DESCRIPTION OF THE DRAWINGS

FIG. 1 is a perspective view of an example of a cermet insert according to a first and a second embodiments.

FIG. 2 is a schematic drawing showing the results of observing the structure of TiCN-based cermet which makes up a cutting insert according to the first embodiment with a scanning electron microscope (magnification: 10,000-fold).

FIG. 3 is a schematic drawing showing the results of observing the structure of TiCN-based cermet which makes up a cutting insert according to the second embodiment with a scanning electron microscope (magnification: 10,000-fold).

FIG. 4A is an explanatory drawing schematically showing a cross-section of a cermet insert according to the third embodiment.

FIG. 4B is an explanatory drawing schematically showing a first hard phase, a second hard phase and a third hard phase which make up a hard phase.

FIG. 5 is a perspective view showing a cermet insert according to the third embodiment.

FIG. 6 is an explanatory drawing showing a cutting tool according to the third embodiment.

FIG. 7 is an explanatory drawing showing a production method of a cermet insert of examples.

Brief Description of the Reference Symbols

1, 11, 21: insert, 3: holder, 5: fixture, 7: cutting tool.

BEST MODE FOR CARRYING OUT THE INVENTION

The following provides an explanation of the constitution of the present invention with reference to the drawings.

(First Embodiment)

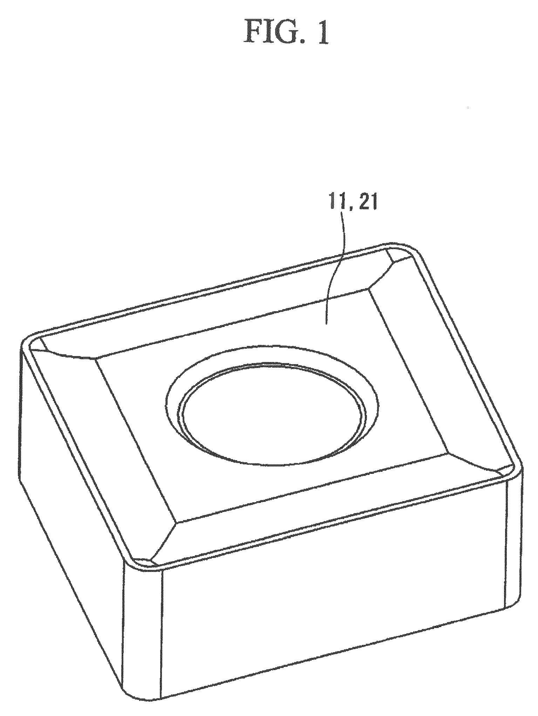

The titanium carbonitride-based cermet insert (to also be referred to as a cutting insert) of the present embodiment is formed from titanium carbonitride-based cermet. An example of a cutting insert is an ISO standard CNMG120412 tip-shaped insert 11 shown in FIG. 1.

This titanium carbonitride-based cermet is a sintered body of a compact having a blended composition containing, as percent by mass%, at least 20 to 30% of tungsten carbide, 5 to 10% of one kind or two kinds of tantalum carbide and niobium carbide (to also be referred to as TaC/NbC), 5 to 10% of Co, 5 to 10% of Ni and 50 to 60% of titanium carbonitride.

When the microstructure is observed with a scanning electron microscope, the aforementioned cermet can be seen to have a microstructure including 75 to 90 area% of a hard phase and the balance including a binding phase.

The hard phase contains the following (1) to (3) as shown in the schematic drawing of FIG. 2.

(1) First hard phase having a core-having structure in which a core portion includes a titanium carbonitride phase and a peripheral portion includes a complex carbonitride phase having Ti, W and one kind or two kinds of Ta and Nb (hereinafter indicated as (Ti,W,Ta/Nb)CN).

(2) Second hard phase having a core-having structure in which both a core portion and a peripheral portion include (Ti,W,Ta/Nb)CN phases.

(3) Third hard phase having a single phase structure including a titanium carbonitride phase.

The binding phase contains a W-Co-Ni-based alloy having a composition including, as a ratio in the binding phase and by mass%, at least
18 to 33% of Co,
20 to 35% of Ni,
Ti, and one kind or two kinds of Ta and Nb, the total amount thereof being 5% or less, and

40 to 60% of W.

The reasons for numerically limiting the blended composition of the TiCN-based cermet which makes up this cutting insert and the component composition of the binding phase as described above are explained below.

(WC of Compact and W of Binding Phase)

The WC powder serving as the raw material powder is put into solid solution in Co and Ni components serving as components that form the binding phase during sintering, and W is remained and contained in the binding phase during the aforementioned alternately changing atmosphere treatment; thereby, a binding phase having a high W content is formed. As a result, since the high-temperature hardness of the binding phase is improved, W acts to contribute to improvement of wear resistance during high-speed cutting by the cutting insert. If the blending ratio of WC is less than 20%, the ratio of W contained in the binding phase is less than 40% as the ratio in the binding phase. As a result, the desired wear resistance during high-speed cutting accompanying generation of high levels of heat cannot be demonstrated. On the other hand, if the blending ratio of WC exceeds 30%, the ratio of W component contained in the binding phase becomes excessively high, exceeding 60% as the ratio in the binding phase. As a result, high-temperature strength of the binding phase itself decreases, thereby causing increased susceptibility to the occurrence of breakage during cutting. On the basis of these factors, the blending ratio of WC is defined to be 20 to 30%, and the W component is defined to be contained at 40 to 60% in the binding phase of the TiCN-based cermet by the aforementioned alternately changing atmosphere treatment.

(TaC/NbC of Compact and Ta/Nb of Binding Phase)

TaC powder and NbC powder similarly serving as raw material powder are also put into solid solution in Co and Ni components serving as components for forming the binding phase during sintering, and then precipitated during cooling to form a hard phase. Ta and Nb are contained in solid solution in the peripheral portion and a part of the core portion of the hard phase, and have the action of improving the high-temperature strength of the hard phase. However, if the blending ratio of one kind or two kinds of this TaC powder and NbC powder is less than 5%, the desired improving effect of the aforementioned action is not obtained. On the other hand, if the blending ratio thereof exceeds 10%, the ratio contained in the hard phase becomes excessively high. This not only causes a decrease in hardness of the hard phase, but also causes the ratio contained in the binding phase to become excessively high, exceeding 5% as the ratio of the total amount with Ti in the binding phase. As a result, high-temperature hardness decreases rapidly. On the basis of these factors, the blending ratio of one kind or two kinds of TaC and NbC is defined to be 5 to 10%, and the total amount of Ti and one kind or two kinds of Ta and Nb in the binding phase is defined to be 5% or less as the ratio in the binding phase.

(Co of Compact and Co of Binding Phase)

Co has the action of improving the strength of cutting inserts by improving sinterability and forming a binding phase. However, if the blending ratio thereof is less than 5%, not only can the desired sinterability not be secured, but the ratio of Co contained in the binding phase (ratio in the binding phase) ends up being less than 18%; thereby preventing the securing of the effect of improving strength of the aforementioned cutting insert. On the other hand, if the blending ratio thereof exceeds 10%, the ratio of Co contained in the binding phase after sintering ends up exceeding 33%. As a result, the high-temperature hardness of the binding phase decreases and wear progresses rapidly. On the basis of these factors, the blending ratio of Co is defined to be 5 to 10%, and the ratio of Co contained in the binding phase is defined to be 18 to 33%.

(Ni of Compact and Ni of Binding Phase)

Ni forms the binding phase together with Co during sintering; thereby improving heat resistance of the binding phase. As a result, Ni has the action of contributing to improved wear resistance of the cutting insert. However, if the blending ratio thereof is less than 5%, the ratio of Ni component contained in the binding phase after sintering (ratio in the binding phase) ends up being less than 20%, thereby preventing the desired effect of improving heat resistance from being obtained. On the other hand, if the blending ratio thereof exceeds 10%, the ratio of Ni contained in the binding phase after sintering becomes excessively high in excess of 35%. As a result, high-temperature strength of the binding phase decreases, thereby resulting in increased susceptibility to breakage of the cutting edge. On the basis of these factors, the blending ratio of Ni is defined to be 5 to 10%, and the ratio of Ni contained in the binding phase is defined to be 20 to 35%.

(TiCN of Compact and Hard Phase)

Raw material powder in the form of TiCN powder forms a hard phase having the aforementioned first to third hard phases during sintering; thereby, improving the hardness of the cutting insert. As a result, TiCN has the action of contributing to improved wear resistance.

However, if the blending ratio of TiCN is less than 50%, the ratio of the hard phase in the cutting insert ends up being less than 75 area%, thereby preventing desired hardness from being secured. On the other hand, if the blending ratio of TiCN exceeds 60%, the ratio of the hard phase becomes excessively high exceeding 90 area%. As a result, the strength of the cutting insert decreases rapidly, resulting in increased susceptibility to breakage during cutting. Moreover, the total amount of Ti and one kind or two kinds of Ta and Nb in the binding phase ends up exceeding 5% as the ratio in the binding phase. As a result, the high-temperature hardness of the binding phase decreases, which causes accelerated wear during high-speed cutting. On the basis of these factors, the blending ratio of TiCN is defined to be 50 to 60%, and the total amount of Ti and one kind or two kinds of Ta and Nb in the binding phase is defined to be 5% or less as the ratio in the binding phase.

(Second Embodiment)

The titanium carbonitride-based cermet insert (to also be referred to as a cutting insert) of the present embodiment is a sintered body of a compact having a blended composition containing, as percent by mass%, at least 20 to 30% of tungsten carbide, 5 to 10% of one kind or two kinds of tantalum carbide and niobium carbide (to also be referred to as TaC/NbC), 1 to 5% of one kind or two kinds of zirconium carbide, vanadium carbide and molybdenum carbide (to also be referred to as ZrC/VC/Mo$_2$C), 5 to 10% of Co, 5 to 10% of Ni, and 50 to 60% of titanium carbonitride. An example of this cutting insert is an ISO standard CNMG120412 tip-shaped cutting insert 21 shown in FIG. 1.

When the microstructure is observed with a scanning electron microscope, the cutting insert can be seen to have a microstructure including 75 to 93 area% of a hard phase and the balance containing a binding phase.

The hard phase contains the following (1) to (3) as shown in the schematic drawing of FIG. 3.

(1) First hard phase having a core-having structure in which a core portion includes a titanium carbonitride phase, and a peripheral portion includes a complex carbonitride phase having Ti, W, one kind or two kinds of Ta and Nb, and one kind or two or more kinds of Zr, V and Mo (hereinafter indicated as (Ti,W,Ta/Nb,Zr/V/Mo)CN).

(2) Second hard phase having a core-having structure in which both a core portion and a peripheral portion include (Ti,W,Ta/Nb,Zr/V/Mo)CN phases.

(3) Third hard phase having a single phase structure including a titanium carbonitride phase.

The binding phase contains W-Co-Ni-based alloy having a composition including, as a ratio in the binding phase and by mass%, at least:

18 to 33% of Co;
20 to 35% of Ni;
Ti, one kind or two kinds of Ta and Nb, and one kind or two or more kinds of Zr, V and Mo, the total amount thereof being 5% or less; and
40 to 60% of W.

The reasons for numerically limiting the blended composition of the compact of the TiCN-based cermet making up this cutting insert and the component composition of the binding phase as described above are explained below.

(WC of Compact and W of Binding Phase)

The WC powder serving as the raw material powder is put into solid solution in Co and Ni components serving as components that form the binding phase during sintering, and W is remained and contained in the binding phase during the aforementioned alternately changing atmosphere treatment; thereby, a binding phase having a high W content is formed. As a result, since the high-temperature hardness of the binding phase is improved, W acts to contribute to improvement of wear resistance during high-speed cutting by the cutting insert. If the blending ratio of WC is less than 20%, the ratio of W contained in the binding phase is less than 40% as the ratio in the binding phase. As a result, the desired wear resistance during high-speed cutting accompanying generation of high levels of heat cannot be demonstrated. On the other hand, if the blending ratio of WC exceeds 30%, the ratio of W component contained in the binding phase becomes excessively high, exceeding 60% as the ratio in the binding phase. As a result, high-temperature strength of the binding phase itself decreases, thereby causing increased susceptibility to the occurrence of breakage during cutting. On the basis of these factors, the blending ratio of WC is defined to be 20 to 30%, and the W component is defined to be contained at 40 to 60% in the binding phase of the TiCN-based cermet by the aforementioned alternately changing atmosphere treatment.

(TaC/NbC and ZrC/VC/Mo$_2$C of Compact and Ta/Nb and Zr/V/Mo of Binding Phase)

TaC/NbC powder similarly serving as raw material powder (to be referred to as the former) and ZrC/VC/Mo$_2$C powder (to be referred to as the latter) are also put into solid solution in Co and Ni components serving as components for forming the binding phase during sintering, and then precipitated during cooling to form a hard phase. They are contained in solid solution in the peripheral portion and a part of the core portion of the hard phase, the former has the action of improving the high-temperature strength of the hard phase, while the latter has the action of improving wettability with the binding phase. Consequently, both have the effect of improving the strength of the cermet itself. However, if the blending ratio of the former is less than 5%, or if the blending ratio of the latter is less than 1%, the desired improving effects of the aforementioned actions are not obtained. On the other hand, if the blending ratio of the former exceeds 10%, or if the blending ratio of the latter exceeds 5%, the ratio contained in the hard phase becomes excessively high. This not only causes a decrease in hardness of the hard phase, but also causes the total amount of Ti, Ta/Nb and Zr/V/Mo in the binding phase to be excessively high, exceeding 5% as the ratio in the binding phase. As a result, high-temperature hardness decreases rapidly. On the basis of these factors, the blending ratio of the former is defined to be 5 to 10%, that of the latter is defined to be 1 to 5%, and the total amount of Ti, Ta/Nb and Zr/V/Mo in the binding phase is defined to be 5% or less as the ratio in the binding phase.

(Co of Compact and Co of Binding Phase)

Co powder serving as a raw material powder has the action of improving the strength of cutting inserts by improving sinterability and forming a binding phase. However, if the blending ratio thereof is less than 5%, not only can the desired sinterability not be secured, but the ratio of Co contained in the binding phase (ratio in the binding phase) ends up being less than 18%; thereby preventing the securing of desired strength for the cutting insert. On the other hand, if the blending ratio thereof exceeds 10%, the ratio of Co contained in the binding phase after sintering ends up exceeding 33%. As a result, the high-temperature hardness of the binding phase decreases and wear progresses rapidly. On the basis of these factors, the blending ratio of Co is defined to be 5 to 10%, and the ratio of Co contained in the binding phase is defined to be 18 to 33%.

(Ni of Compact and Ni of Binding Phase)

Ni serving as a raw material powder forms the binding phase together with Co during sintering; thereby improving heat resistance of the binding phase. As a result, Ni has the action of contributing to improved wear resistance of the cutting insert. However, if the blending ratio thereof is less than 5%, the ratio of Ni component contained in the binding phase after sintering (ratio in the binding phase) ends up being less than 20%, thereby preventing the desired effect of improving heat resistance from being obtained. On the other hand, if the blending ratio thereof exceeds 10%, the ratio of Ni contained in the binding phase after sintering becomes excessively high in excess of 35%. As a result, high-temperature strength of the binding phase decreases, thereby resulting in increased susceptibility to breakage of the cutting edge. On the basis of these factors, the blending ratio of Ni is defined to be 5 to 10%, and the ratio of Ni contained in the binding phase is defined to be 20 to 35%.

(TiCN of Compact and Hard Phase)

Raw material powder in the form of TiCN powder forms a hard phase having the aforementioned first to third hard phases during sintering; thereby, improving the hardness of the cutting insert. As a result, TiCN has the action of contributing to improved wear resistance.

However, if the blending ratio of TiCN is less than 50%, the ratio of the hard phase in the cutting insert ends up being less than 75 area%, thereby preventing desired hardness from being secured. On the other hand, if the blending ratio of TiCN exceeds 60%, the ratio of the hard phase becomes excessively high exceeding 93 area%. As a result, the strength of the cutting insert decreases rapidly, resulting in increased susceptibility to breakage during cutting. Moreover, the total amount of Ti, Ta/Nb and Zr/V/Mo in the binding phase ends up exceeding 5% as the ratio in the binding phase. As a result, the high-temperature hardness of the binding phase decreases, which causes accelerated wear during high-speed cutting. On the basis of these factors, the blending ratio of TiCN is defined to be 50 to 60%, and the total amount of Ti, Ta/Nb and Zr/V/Mo in the binding phase is defined to be 5% or less as the ratio in the binding phase.

(Third Embodiment; not belonging to the invention)

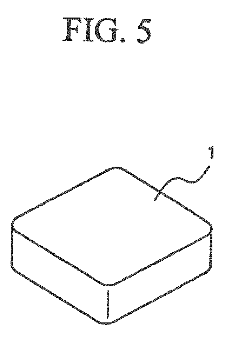

Cermet insert 1 of the present embodiment is a cutting insert including an ISO standard SNGN120408 tip-shaped sintered body as shown in FIG. 5.

This insert 1 is formed from titanium carbonitride-based cermet including a sintered body containing Ti, one kind or two kinds of Ta and Nb (to also be referred to as Ta/Nb) and W. The sintered body composition of the insert 1 is shown below. The total of the amount of Ti converted as carbonitride, the amount of one kind or two kinds of Ta and Nb converted as carbide, and the amount of W converted as carbide is 70 to 95 mass% as the ratio to the entire constitution that makes up the sintered body.

In addition, the amount of W converted as carbide is 20 to 35 mass% as the ratio to the entire constitution, and the amount of Co and Ni is 5 to 30 mass% converted as the ratio to the entire constitution.

Ti is contained at 45 to 60 mass% converted as carbonitride based on the entire constitution, while one kind or two kinds of Ta and Nb are contained at 5 to 10 mass% converted as carbide based on the entire constitution.

As shown in FIG. 4A, this insert 1 includes a microstructure containing hard phases (hard particles) and binding phases present so as to cover the periphery thereof.

The hard phase includes a complex carbonitride containing Ti, W and one kind or two kinds of Ta and Nb (hereinafter indicated as (Ti,W,Ta/Nb)CN) and titanium carbonitride. The binding phase includes for main components thereof W and one kind or two kinds of Co and Ni (to also be referred to as (Co/Ni)).

Furthermore, " includes for main components thereof W and one kind or two kinds of Co and Ni" refers to indicating a state of the total amount thereof being more than the total amount of other components, reaching, for example, a total amount of 98 mass%.

40 to 65 mass% of the W contained in the entire constitution is contained in the hard phase, while the balance is contained in the binding phase.

The hard phase includes all of the hard phases of the following (1) to (3) as indicated in, for example, FIG. 4B.

(1) First hard phase having a core-having structure in which a core portion includes a titanium carbonitride phase and a peripheral portion includes a (Ti,W,Ta/Nb)CN phase.
(2) Second hard phase having a core-having structure in which both a core portion and a peripheral portion include (Ti,W,Ta/Nb)CN phases.
(3) Third hard phase having a single phase structure including a titanium carbonitride phase.

The reasons for numerically limiting the composition of the titanium carbonitride-based cermet making up this cutting insert and the component compositions of the hard phase and the binding phase as described above are explained below. Furthermore, the content of Ti is the amount converted as TiCN, the content of Nb and/or Ta is the amount converted as (Nb/Ta) C, and the content of W is the amount converted as WC.

Carbonitrides such as the complex carbonitride and titanium carbonitride that form the hard phase (hard particles) have the action of improving wear resistance by improving cermet hardness. However, if the ratio of the hard phase exceeds 95 mass% of the entire cermet, the relative ratio of the binding phase becomes less than 5 mass%, thereby causing a decrease in toughness and breakage resistance. On the other hand, if the ratio of the hard phase is less than 70 mass%, the relative ratio of the binding phase ends up exceeding 30 mass%, thereby lowering the wear resistance of the cermet. On the basis of these factors, the total of the amount of Ti converted as carbonitride, the amount of one kind or two kinds of Ta and Nb converted as carbide, and the amount of W converted as carbide is defined to be 70 to 95 mass% as the ratio to the entire constitution that makes up the sintered body.

In addition, the wear resistance of the insert can be improved by containing W at 20 to 35 mass% (converted as WC) based on the entire constitution.

Moreover, Co has the effect of improving the strength of the insert by improving sinterability and forming a binding phase. Ni has the effect of enhancing wear resistance of the insert by forming a binding phase during sintering and improving heat resistance of the binding phase. The aforementioned characteristics can be demonstrated by containing Co and Ni at a total amount of 5 to 30 mass%. The amount of Co and Ni is each preferably 5 mass% or more.

In the present embodiment in particular, in addition to W contained in the entire constitution being distributed at 40 to 65 mass% converted as carbide in the hard phase, the balance is distributed in the binding phase.

In other words, in the present embodiment, since the hard phase is strengthened as a result of containing 40 to 65 mass% of the W contained in the entire constitution in the hard phase in the form of a solid solution, breakage resistance (and particularly thermal shock resistance) is improved. Moreover, since the hardness of the binding phase increases as a result of containing the balance of the W in the binding phase, wear resistance is improved. As a result, the remarkable effect of being able to realize both high levels of wear resistance and breakage resistance is demonstrated.

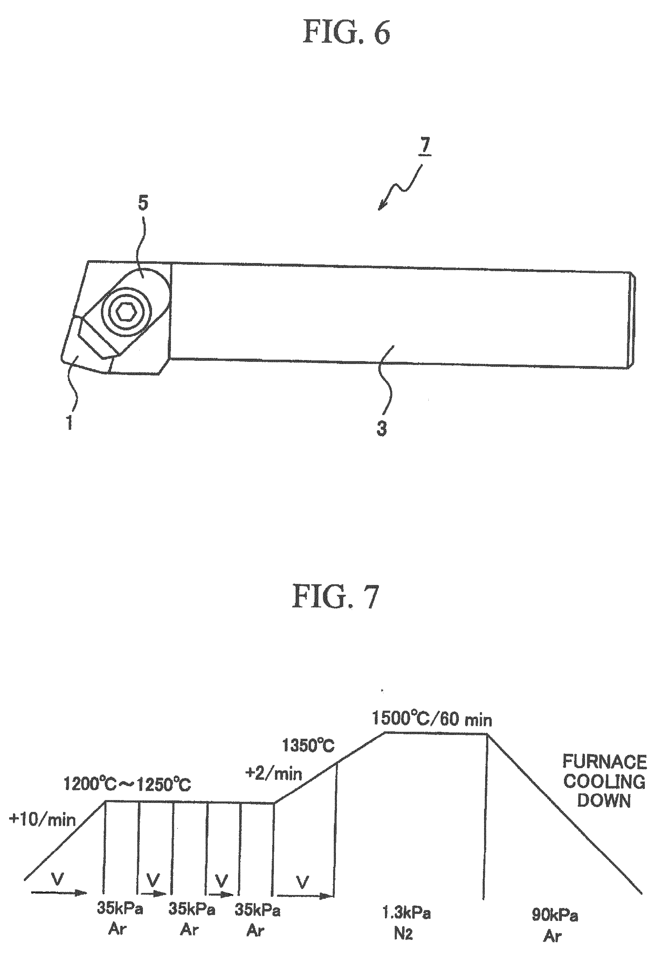

As shown in FIG. 6, the aforementioned insert 1 is fixed on the end of a steel, tool holder 3 by a fixture 5. A cutting tool 7, in which the insert 1 is fixed to the holder 3, is used for cutting a steel and the like.

Furthermore, the following constitution described in the first embodiment, for example, can be further employed in the present embodiment.

For example, "a sintered body of a compact having a blended composition containing at least 20 to 30 mass% of tungsten carbide, 5 to 10 mass% of one kind or two kinds of tantalum carbide and niobium carbide, 5 to 10 mass% of Co, 5 to 10 mass% of Ni and 50 to 60% mass% of titanium carbonitride" can be employed as an insert.

Moreover, "a constitution having a microstructure including 75 to 90 area% of a hard phase and the balance containing a binding phase when the microstructure is observed with a scanning electron microscope", for example, can be employed as the aforementioned sintered body.

What is more, "a W-Co-Ni-based alloy having a composition containing, as a ratio in the binding phase, at least 18 to 33 mass% of Co, 20 to 35 mass% of Ni, Ti and one kind or two kinds of Ta and Nb, the total amount thereof being 5 mass% or less, and 40 to 60 mass% of W", for example, can be employed as the aforementioned binding phase.

Furthermore, unavoidable impurities are normally contained in the balance of the composition. In addition, in the present description, the term "A and/or B" refers to at least one of A and B.

EXAMPLES

(Example 1)

The following provides a more detailed explanation of the cutting insert of the first embodiment through an example thereof.

$TiC_{0.5}N_{0.5}$ powder, $TiC_{0.3}N_{0.7}$ powder, $TiC_{0.15}N_{0.85}$ powder (wherein, C/N indicates the atomic ratio), NbC powder, TaC powder, WC powder, Co powder and Ni powder, each having a mean particle 4iameter of 0.5 to 2 $\mu$m, were prepared for use as raw material powders. These raw material powders were blended in the blended compositions shown in Table 1 and then were subjected to wet mixing for 24 hours with a ball mill and drying. Subsequently, the blended compositions were pressed into compacts at a pressure of 98 MPa, and the compacts were sintered under the following sintering conditions (a) to (e).

(a) The temperature was raised from room temperature to 1280°C at the rate of 2°C/min. in a vacuum atmosphere at 10 Pa or less.

(b) At the point the temperature had risen to 1280°C, alternately changing atmosphere treatment was carried out by repeatedly alternating between holding in an Ar atmosphere for a short period of time which includes holding for 2 minutes in an Ar atmosphere at 35 kPa, and holding in a vacuum atmosphere for a short period of time which includes holding for 10 minutes in a vacuum atmosphere at 10 Pa or less, each for the number of times indicated in Table 1.

(c) After the aforementioned alternately changing atmosphere treatment, the temperature was raised to 1420°C at the rate of 2°C/min in a vacuum atmosphere at 10 Pa or less.

(d) The temperature was raised from 1420°C to a predetermined sintering temperature within a range of 1480 to 1560°C at the rate of 2°C/min, and then the temperature was held at the aforementioned sintering temperature for 1.5 hours. Raising the temperature to the sintering temperature and holding at the sintering temperature were carried out in a nitrogen atmosphere at 1300 Pa.

(e) Cooling of the furnace from the aforementioned sintering temperature was carried out in a vacuum atmosphere at 10 Pa or less.

After sintering, cutting inserts 1-1 to 1-10 in accordance with the first embodiment of the present invention were respectively produced in the shape of an ISO standard CNMG120412 tip as shown in FIG. 1 by carrying out honing processing at R = 0.07 on the cutting edge.

In addition, conventional cutting inserts 1-1 to 1-10 were respectively produced under substantially the same conditions with the exception of not carrying out the aforementioned alternately changing atmosphere treatment during the process of raising the temperature to the sintering temperature as shown in Table 2 for the purpose of comparison.

The results of observing the microstructures of TiCN-based cermets making up the resulting the cutting inserts 1-1 to 1-10 of the present invention and the conventional cutting inserts 1-1 to 1-10 with a scanning electron microscope, and the results of analyzing their binding phases, are shown in Tables 3 and 4, respectively.

Next, the cutting inserts 1-1 to 1-10 of the present invention and the conventional cutting inserts 1-1 to 1-10 were subjected to a high-speed cutting test of alloy steel under the following cutting conditions 1-A to 1-C while bolted to the end of a steel shank tool holder with a fixture. The width of flank wear of the cutting edge was measured in each cutting test. The measurement results are shown in Table 5.

Cutting Conditions 1-A (Dry, Intermittent, High-Speed Cutting Test of Alloy Steel):

Cut material: Round bar containing four longitudinal slits at equal intervals in the direction of length made of JIS SCM440;
Cutting speed: 300 m/min;
Depth of cut: 1.5 mem;
Feed rate: 0.2 mm/rev; and
Cutting time: 10 minutes (ordinary cutting speed: 200 m/min) .

Cutting Conditions 1-B (Dry, Continuous, High-Speed Cutting Test of Carbon Steel):

Cut material: Round bar made of JIS S20C;
Cutting speed: 350 m/min;
Depth of cut: 1.0 mm;
Feed rate: 0.2 mm/rev; and
Cutting time: 20 minutes (ordinary cutting speed: 250 m/min) .

Cutting Conditions 1-C (Dry, Continuous, High-Speed Cutting Test of Cast Iron):
Cut material: Round bar made of JIS FC300;
Cutting speed: 400 m/min;
Depth of cut: 2.5 mm;
Feed rate: 0.3 mm/rev; and
Cutting time: 20 minutes (ordinary cutting speed: 280 m/min) .

Table 1

| Type | | Blended Composition | | | | | | | | Alternately Changing Atmosphere Treatment during Heating Process | |
|---|---|---|---|---|---|---|---|---|---|---|---|
| | | $TiC_{0.5}N_{0.5}$ | $TiC_{0.3}N_{0.7}$ | $TiC_{0.15}N_{0.85}$ | WC | TaC | NbC | Co | Ni | Number of times held in Ar for short period of time | Number of times held in vacuum for short period of time |
| Cutting inserts of present invention | 1-1 | 25 | 25 | - | 20 | 10 | - | 10 | 10 | 2 | 2 |
| | 1-2 | - | 25 | 25 | 25 | - | 5 | 10 | 10 | 2 | 3 |
| | 1-3 | 35 | - | 15 | 30 | 5 | 5 | 5 | 5 | 3 | 2 |
| | 1-4 | 35 | 20 | - | 25 | - | 7 | 6 | 7 | 3 | 3 |
| | 1-5 | - | 45 | 10 | 25 | 10 | - | 5 | 5 | 3 | 4 |
| | 1-6 | 15 | - | 40 | 30 | 1 | 4 | 5 | 5 | 4 | 3 |
| | 1-7 | 10 | 50 | - | 20 | 5 | - | 6 | 9 | 4 | 4 |
| | 1-8 | - | 30 | 30 | 20 | 4 | 3 | 8 | 5 | 5 | 4 |
| | 1-9 | 40 | - | 20 | 25 | - | 5 | 5 | 5 | 5 | 5 |
| | 1-10 | 20 | 20 | 20 | 20 | - | 7 | 6 | 7 | 6 | 6 |

EP 1 892 052 B1

Table 2

| Type | | Blended Composition | | | | | | | | Alternately Changing Atmosphere Treatment during Heating Process | |
|---|---|---|---|---|---|---|---|---|---|---|---|
| | | $TiC_{0.5}N_{0.5.}$ | $TiC_{0.3}N_{0.7}$ | $TiC_{0.15}N_{0.85}$ | WC | TaC | NbC | Co | Ni | Number of times held in Ar for short period of time | Number of times held in vacuum for short period of time |
| Conventional cutting inserts | 1-1 | 50 | - | - | 20 | 10 | - | 10 | 10 | - | - |
| | 1-2 | 50 | - | - | 25 | - | 5 | 10 | 10 | - | - |
| | 1-3 | 50 | - | - | 30 | 5 | 5 | 5 | 5 | - | - |
| | 1-4 | 55 | - | - | 25 | - | 7 | 6 | 7 | - | - |
| | 1-5 | 55 | - | - | 25 | 10 | - | 5 | 5 | - | - |
| | 1-6 | 55 | - | - | 30 | 1 | 4 | 5 | 5 | - | - |
| | 1-7 | 60 | - | - | 20 | 5 | - | 6 | 9 | - | - |
| | 1-8 | 60 | - | - | 20 | 4 | 3 | 8 | 5 | - | - |
| | 1-9 | 60 | - | - | 25 | - | 5 | 5 | 5 | - | - |
| | 1-10 | 60 | - | - | 20 | - | 7 | 6 | 7 | - | - |

Table 3

| Type | | | TiCN-based Cermet | | | | | | | |
|---|---|---|---|---|---|---|---|---|---|---|
| | | | Microstructure (area%) | | Component Composition of Binding Phase (mass%) | | | | | |
| | | | Hard phase | Binding phase | Co | Ni | Ti | Ta | Nb | W |
| Cutting inserts of present invention | 1-1 | | 75.1 | Balance | 29.0 | 29.5 | 0.6 | 0.5 | - | 40.2 |
| | 1-2 | | 78.7 | Balance | 28.5 | 29.4 | 0.6 | - | 0.4 | 40.9 |
| | 1-3 | | 84.9 | Balance | 18.1 | 20.0 | 1.0 | 0.6 | 0.4 | 59.8 |
| | 1-4 | | 84.7 | Balance | 21.7 | 25.2 | 1.1 | - | 0.9 | 51.0 |
| | 1-5 | | 89.8 | Balance | 27.5 | 27.9 | 2.0 | 0.8 | - | 41.7 |
| | 1-6 | | 86.7 | Balance | 19.8 | 20.1 | 1.9 | 0.5 | 0.8 | 56.6 |
| | 1-7 | | 85.0 | Balance | 22.0 | 34.8 | 2.0 | 0.9 | - | 40.1 |
| | 1-8 | | 86.6 | Balance | 32.9 | 20.5 | 2.5 | 0.7 | 0.8 | 42.5 |
| | 1-9 | | 88.4 | Balance | 22.4 | 22.5 | 2.7 | - | 1.4 | 50.7 |
| | 1-10 | | 88.7 | Balance | 27.4 | 23.5 | 3.0 | - | 1.9 | 50.7 |

Table 4

| Type | | | TiCN-based Cermet | | | | | | | |
|---|---|---|---|---|---|---|---|---|---|---|
| | | | Microstructure (area%) | | Component Composition of Binding Phase (mass%) | | | | | |
| | | | Hard phase | Binding phase | W | Ti | Ta | Nb | Ni | Co |
| Conventional cutting inserts | 1-1 | | 83.1 | Balance | 48.7 | 0.6 | - | 49.0 | 0.5 | 1.1 |
| | 1-2 | | 84.2 | Balance | 48.3 | - | 0.3 | 48.2 | 0.6 | 2.3 |
| | 1-3 | | 91.5 | Balance | 44.6 | 0.5 | 0.5 | 44.5 | 1.1 | 8.4 |
| | 1-4 | | 90.0 | Balance | 93.5 | - | 0.9 | 51.0 | 1.0 | 3.4 |
| | 1-5 | | 91.8 | Balance | 43.2 | 1.0 | - | 43.6 | 2.2 | 9.9 |
| | 1-6 | | 91.9 | Balance | 44.1 | 0.4 | 0.7 | 44.4 | 2.0 | 8.3 |
| | 1-7 | | 88.8 | Balance | 34.5 | 0.9 | - | 59.9 | 1.9 | 2.5 |
| | 1-8 | | 90.1 | Balance | 54.6 | 0.5 | 1.1 | 35.0 | 2.1 | 6.5 |
| | 1-9 | | 92.8 | Balance | 45.5 | - | 1.7 | 45.8 | 2.5 | 4.3 |
| | 1-10 | | 90.1 | Balance | 39.5 | - | 1.9 | 46.2 | 3.1 | 9.2 |

Table 5

| Type | | Width of Flank Wear (mm) | | | Type | | Width of Flank Wear (mm) | | |
|---|---|---|---|---|---|---|---|---|---|
| | | Cutting conditions 1-A | Cutting conditions 1-B | Cutting conditions 1-C | | | Cutting conditions 1-A | Cutting conditions 1-B | Cutting conditions 1-C |
| Cutting inserts of present invention | 1-1 | 0.11 | 0.16 | 0.25 | Conventional cutting inserts | 1-1 | 0.38 | 0.37 | 0.47 |
| | 1-2 | 0.15 | 0.18 | 0.20 | | 1-2 | 0.37 | 0.36 | 0.47 |
| | 1-3 | 0.13 | 0.17 | 0.25 | | 1-3 | 0.38 | 0.39 | 0.49 |
| | 1-4 | 0.15 | 0.15 | 0.24 | | 1-4 | 0.36 | 0.38 | 0.48 |
| | 1-5 | 0.13 | 0.19 | 0.21 | | 1-5 | 0.37 | 0.38 | 0.46 |
| | 1-6 | 0.12 | 0.17 | 0.21 | | 1-6 | 0.40 | 0.37 | 0.45 |
| | 1-7 | 0.12 | 0.16 | 0.20 | | 1-7 | 0.36 | 0.42 | 0.49 |
| | 1-8 | 0.10 | 0.19 | 0.21 | | 1-8 | 0.37 | 0.39 | 0.51 |
| | 1-9 | 0.14 | 0.16 | 0.22 | | 1-9 | 0.39 | 0.41 | 0.45 |
| | 1-10 | 0.13 | 0.17 | 0.24 | | 1-10 | 0.34 | 0.41 | 0.49 |

Based on the results shown in Tables 1 to 5, in all of the cutting inserts 1-1 to 1-10 of the present invention, the binding phase of the TiCN-based cermet making up these cutting inserts contained W at a high content of 40 to 60% as the ratio in the binding phase; thereby, the cutting inserts were provided with superior high-temperature hardness, as a result, the cutting inserts were determined to demonstrate superior wear resistance even during high-temperature cutting accompanying generation of high levels of heat. In contrast, in the conventional cutting inserts 1-1 to 1-10, the ratio of W contained in the binding phase was low at 1 to 10% as the ratio in the binding phase in all of these cutting inserts. As a result, the binding phase cannot be expected to demonstrate superior high-temperature hardness. Consequently, it is clear that progression of wear of the binding phase is accelerated particularly during high-speed cutting, thereby leading to a comparatively short service life.

As has been described above, a cutting insert of the present invention demonstrates superior wear resistance not only during cutting under ordinary conditions such as when cutting various types of steel and cast iron, but also during high-speed cutting accompanying the generation of high levels of heat. Consequently, this cutting insert is able to adequately accommodate conservation of power, conservation of energy and reduction of costs.

(Example 2)

The following provides a more detailed explanation of the cutting insert of the second embodiment through an example thereof.

$TiC_{0.5}N_{0.5}$ powder, $TiC_{0.3}N_{0.7}$ powder, $TiC_{0.15}N_{0.85}$ powder (wherein, C/N indicates the atomic ratio), NbC powder, TaC powder, WC powder, TaC powder, NbC powder, ZrC powder, VC powder, $Mo_2C$ powder, Co powder and Ni powder, each having a mean particle diameter of 0.5 to 2 $\mu$m, were prepared for use as raw material powders. These raw material powders were blended in the blended compositions shown in Table 6 and then were subjected to wet mixing for 24 hours with a ball mill and drying. Subsequently, the blended compositions were pressed into compacts at a pressure of 98 MPa, and the compacts were sintered under the following sintering conditions (a) to (e).

(a) The temperature was raised from room temperature to 1280°C at the rate of 2°C/min. in a vacuum atmosphere at 10 Pa or less.
(b) At the point the temperature had risen to 1280°C, alternately changing atmosphere treatment was carried out by repeatedly alternating between holding in an Ar atmosphere for a short period of time which includes holding for 2 minutes in an Ar atmosphere at 35 kPa, and holding in a vacuum atmosphere for a short period of time which includes holding for 10 minutes in a vacuum atmosphere at 10 Pa or less, each for the number of times indicated in Table 6.
(c) After the aforementioned alternately changing atmosphere treatment, the temperature was raised to 1420°C at the rate of 2°C/min in a vacuum atmosphere at 10 Pa or less.
(d) The temperature was raised from 1420°C to a predetermined sintering temperature within a range of 1480 to 1560°C at a rate of 2°C/min, and then the temperature was held at the aforementioned sintering temperature for 1.5 hours. Raising the temperature to the sintering temperature and holding at the sintering temperature were carried out in a nitrogen atmosphere at 1300 Pa.
(e) Cooling of the furnace from the aforementioned sintering temperature was carried out in a vacuum atmosphere at 10 Pa or less.

After sintering, cutting inserts 2-1 to 2-15 in accordance with the second embodiment of the present invention were respectively produced in the shape of an ISO standard CNMG120412 tip as shown in FIG. 1 by carrying out honing processing at R = 0.07 on the cutting edge.

In addition, conventional cutting inserts 2-1 to 2-15 were respectively produced under substantially the same conditions with the exception of using only the aforementioned $TiC_{0.5}N_{0.5}$ powder for the TiCN powder used as a raw material powder, and not carrying out the aforementioned alternately changing atmosphere treatment during the process of raising the temperature to the sintering temperature as shown in Table 7 for the purpose of comparison.

The results of observing the microstructure of TiCN-based cermet making up the resulting the cutting inserts 2-1 to 2-15 of the present invention and the conventional cutting inserts 2-1 to 2-15 with a scanning electron microscope, and the results of analyzing their binding phases, are shown in Tables 8 and 9, respectively.

Next, the cutting inserts 2-1 to 2-15 of the present invention and the conventional cutting inserts 2-1 to 2-15 were subjected to a high-speed cutting test of alloy steel under the following cutting conditions 2-A to 2-C while bolted to the end of a steel shank tool holder with a fixture. The width of flank wear of the cutting edge was measured in each cutting test. The measurement results are shown in Table 10.

Cutting Conditions 2-A (Dry, Intermittent, High-Speed Cutting Test of Carbon Steel):

Cut material: Round bar containing four longitudinal slits at equal intervals in the direction of length made of JIS S20C;

Cutting speed: 380 m/min;
Depth of cut: 1.5 mm;
Feed rate: 0.2 mm/rev; and
Cutting time: 10 minutes (ordinary cutting speed: 250 m/min).
Cutting Conditions 2-B (Dry, Continuous, High-Speed Cutting Test of Alloy Steel):
Cut material: Round bar made of JIS SCM440;
Cutting speed: 300 m/min;
Depth of cut: 1 mm;
Feed rate: 0.2 mm/rev; and
Cutting time: 20 minutes (ordinary cutting speed: 200 m/min) .

Cutting Conditions 2-C (Dry, Continuous, High-Speed Cutting Test of Cast Iron):

Cut material: Round bar made of JIS FC300;
Cutting speed: 380 m/min;
Depth of cut: 2.5 mm;
Feed rate: 0.3 mm/rev; and
Cutting time: 20 minutes (ordinary cutting speed: 280 m/min) .

Table 6

| Type | Blended Composition | | | | | | | | | | | Alternately Changing Atmosphere Treatment during Heating Process | |
|---|---|---|---|---|---|---|---|---|---|---|---|---|---|---|
| | $TiC_{0.5}N_{0.5}$ | $TiC_{0.3}N_{0.7}$ | $TiC_{0.15}N_{0.85}$ | WC | TaC | NbC | ZrC | VC | $Mo_2C$ | Co | Ni | Number of times held in Ar for short period of time | Number of times held in vacuum for short period of time |
| 2-1 | 20 | 33 | - | 20 | - | 5 | - | 2 | - | 10 | 10 | 2 | 2 |
| 2-2 | 25 | - | 25 | 22 | 6 | - | 1 | - | 1 | 10 | 10 | 2 | 2 |
| 2-3 | - | 35 | 15 | 25 | 5 | - | 3 | - | - | 7 | 8 | 3 | 2 |
| 2-4 | 17 | 17 | 17 | 28 | - | 6 | - | - | 2 | 6 | 7 | 3 | 2 |
| 2-5 | 10 | - | 42 | 30 | 5 | - | 1 | 1 | 1 | 5 | 5 | 3 | 3 |
| 2-6 | 35 | 21 | - | 20 | 3 | 3 | - | 2 | 1 | 7 | 8 | 4 | 3 |
| 2-7 | 40 | - | 14 | 22 | - | 7 | 2 | - | - | 9 | 6 | 4 | 3 |
| 2-8 | - | 20 | 35 | 25 | 6 | - | 2 | 1 | 2 | 5 | 6 | 5 | 3 |
| 2-9 | 10 | 34 | 10 | 28 | - | 5 | 1 | 1 | 1 | 5 | 5 | 5 | 4 |
| 2-10 | 28 | 28 | - | 28 | - | 5 | - | 1 | - | 5 | 5 | 6 | 4 |
| 2-11 | 15 | 42 | - | 20 | 7 | - | - | - | 3 | 5 | 8 | 2 | 4 |
| 2-12 | 20 | 20 | 20 | 22 | 1 | 4 | - | 3 | - | 5 | 5 | 2 | 5 |
| 2-13 | 28 | - | 30 | 24 | | 5 | 1 | 1 | 1 | 5 | 5 | 3 | 5 |
| 2-14 | - | 10 | 49 | 21 | 5 | - | 5 | - | - | 5 | 5 | 3 | 5 |
| 2-15 | - | 13 | 45 | 20 | 4 | 3 | - | 4 | 1 | 5 | 5 | 3 | 6 |

Type: Cutting inserts of present invention

Table 7

| Type | | TiC$_{0.5}$N$_{0.5}$ | TiC$_{0.3}$N$_{0.7}$ | TiC$_{0.15}$N$_{0.85}$ | WC | TaC | NbC | ZrC | VC | MO$_2$C | Co | Ni | Number of times held in Ar for short period of time | Number of times held in vacuum for short period of time |
|---|---|---|---|---|---|---|---|---|---|---|---|---|---|---|
| | | Blended Composition | | | | | | | | | | | Alternately Changing Atmosphere Treatment during Heating Process | |
| Conventional cutting inserts | 2-1 | 53 | - | - | 20 | - | 5 | - | 2 | - | 10 | 10 | - | - |
| | 2-2 | 50 | - | - | 22 | 6 | - | 1 | - | 1 | 10 | 10 | - | - |
| | 2-3 | 50 | - | - | 25 | 5 | 2 | 3 | - | - | 7 | 8 | - | - |
| | 2-4 | 51 | - | - | 28 | - | 6 | - | - | 2 | 6 | 7 | - | - |
| | 2-5 | 52 | - | - | 30 | 5 | - | 1 | 1 | 1 | 5 | 5 | - | - |
| | 2-6 | 56 | - | - | 20 | 3 | 3 | - | 2 | 1 | 7 | 8 | - | - |
| | 2-7 | 54 | - | - | 22 | - | 7 | 2 | - | - | 9 | 6 | - | - |
| | 2-8 | 55 | - | - | 25 | 6 | - | - | 1 | 2 | 5 | 6 | - | - |
| | 2-9 | 54 | - | - | 28 | - | 5 | 1 | 1 | 1 | 5 | 5 | - | - |
| | 2-10 | 56 | - | - | 28 | - | 5 | - | 1 | - | 5 | 5 | - | - |
| | 2-11 | 57 | - | - | 20 | 7 | - | - | - | 3 | 5 | 8 | - | - |
| | 2-12 | 60 | - | - | 22 | 1 | 4 | - | 3 | - | 5 | 5 | - | - |
| | 2-13 | 58 | - | - | 24 | - | 5 | 1 | 1 | 1 | 5 | 5 | - | - |
| | 2-14 | 59 | - | - | 21 | 5 | - | 5 | - | - | 5 | 5 | - | - |
| | 2-15 | 58 | - | - | 20 | 4 | 3 | - | 4 | 1 | 1 5 | 5 | - | - |

EP 1 892 052 B1

Table 8

| Type | | TiCN-based Cermet | | | | | | | | | | |
|---|---|---|---|---|---|---|---|---|---|---|---|---|
| | | Microstructure (area%) | | Component Composition of Binding Phase (mass%) | | | | | | | | |
| | | Hard phase | Binding phase | Co | Ni | Ti | Ta | Nb | Zr | V | Mo | W |
| Cutting Inserts of Present Invention | 2-1 | 79.6 | Balance | 28.6 | 28.6 | 1.1 | - | 0.6 | - | 0.4 | - | 40.5 |
| | 2-2 | 75.2 | Balance | 27.0 | 27.3 | 1.0 | 0.6 | - | 0.2 | - | 0.2 | 45.5 |
| | 2-3 | 80.5 | Balance | 20.2 | 23.2 | 0.6 | 0.4 | 0.3 | 0.5 | - | - | 54.5 |
| | 2-4 | 81.1 | Balance | 18.1 | 20.2 | 1.0 | - | 0.5 | - | 0.6 | 0.2 | 59.8 |
| | 2-5 | 88.2 | Balance | 24.6 | 24.9 | 1.8 | 0.8 | - | 0.4 | 0.9 | 0.3 | 46.5 |
| | 2-6 | 83.5 | Balance | 22.9 | 26.1 | 1.5 | 0.8 | 1.1 | - | - | 0.5 | 46.0 |
| | 2-7 | 84.4 | Balance | 32.9 | 22.8 | 1.1 | - | 0.7 | 0.2 | 0.2 | - | 42.0 |
| | 2-8 | 85.6 | Balance | 18.5 | 22.4 | 0.6 | 1.1 | - | - | 0.3 | 0.3 | 56.6 |
| | 2-9 | 89.4 | Balance | 27.2 | 27.6 | 1.2 | - | 1.6 | 0.3 | 0.5 | 0.2 | 41.2 |
| | 2-10 | 89.5 | Balance | 27.9 | 27.6 | 1.0 | - | 1.3 | - | - | - | 41.6 |
| | 2-11 | 86.5 | Balance | 22.9 | 34.9 | 0.7 | 0.7 | - | - | - | 0.5 | 41.1 |
| | 2-12 | 92.9 | Balance | 27.6 | 27.4 | 1.8 | 0.5 | 1.3 | - | 1.0 | - | 40.1 |
| | 2-13 | 88.4 | Balance | 22.1 | 22.6 | 1.5 | - | 1.6 | 0.6 | 0.5 | 0.6 | 50.3 |
| | 2-14 | 87.4 | Balance | 20.3 | 20.7 | 0.6 | 0.6 | - | 0.4 | - | - | 57.3 |
| | 2-15 | 87.8 | Balance | 20.6 | 20.5 | 1.9 | 1.3 | 0.9 | - | 0.5 | 0.2 | 53.9 |

Table 9

| Type | | TiCN-based Cermet | | | | | | | | | | |
|---|---|---|---|---|---|---|---|---|---|---|---|---|
| | | Microstructure (area%) | | Component Composition of Binding Phase (mass%) | | | | | | | | |
| | | Hard phase | Binding phase | W | Ti | Ta | Nb | Zr | V | Mo | Ni | Co |
| Conventional-cutting Inserts | 2-1 | 84.6 | Balance | 4.2 | 1.0 | - | 0.5 | - | 0.3 | - | 46.8 | 47.0 |
| | 2-2 | 84.0 | Balance | 1.8 | 1.2 | 0.4 | - | 0.2 | - | 0.2 | 48.1 | 47.8 |
| | 2-3 | 88.0 | Balance | 1.9 | 0.9 | 0.4 | 0.3 | 0.3 | - | - | 51.3 | 44.6 |
| | 2-4 | 89.4 | Balance | 6.0 | 0.9 | - | 0.5 | - | - | 0.5 | 49.2 | 42.5 |
| | 2-5 | 91.9 | Balance | 2.1 | 1.6 | 0.9 | - | 0.6 | 0.4 | 0.3 | 46.7 | 47.1 |
| | 2-6 | 88.3 | Balance | 7.9 | 1.3 | 0.8 | 1.0 | - | 1.1 | 0.8 | 46.3 | 40.5 |
| | 2-7 | 88.5 | Balance | 4.1 | 1.0 | - | 0.6 | 0.4 | - | - | 35.2 | 58.8 |
| | 2-8 | 91.3 | Balance | 3.4 | 1.1 | 0.9 | - | - | 0.2 | 0.2 | 51.7 | 42.4 |
| | 2-9 | 91.9 | Balance | 9.9 | 1.2 | - | 1.7 | 0.3 | 0.2 | 0.4 | 43.1 | 43.0 |
| | 2-10 | 92.2 | Balance | 4.3 | 0.9 | - | 1.1 | - | 1.0 | - | 46.3 | 46.2 |
| | 2-11 | 89.8 | Balance | 6.8 | 0.8 | 0.7 | - | - | - | 0.6 | 59.9 | 31.1 |
| | 2-12 | 92.7 | Balance | 1.4 | 1.5 | 0.7 | 1.6 | - | 1.2 | - | 46.6 | 46.7 |
| | 2-13 | 92.3 | Balance | 6.9 | 1.6 | - | 1.4 | 0.7 | 0.6 | 0.7 | 44.2 | 43.8 |

(continued)

| Type | | TiCN-based Cermet | | | | | | | | | | |
|---|---|---|---|---|---|---|---|---|---|---|---|---|
| | | Microstructure (area%) | | Component Composition of Binding Phase (mass%) | | | | | | | | |
| | | Hard phase | Binding phase | W | Ti | Ta | Nb | Zr | V | Mo | Ni | Co |
| | 2-14 | 92.4 | Balance | 4-4 | 0.6 | 0.8 | - | 0.6 | - | - | 46.8 | 46.5 |
| | 2-15 | 92.3 | Balance | 8.9 | 1.7 | 1.2 | 1.0 | - | 1.1 | 0.2 | 43.1 | 42.6 |

Table 10

| Type | | Width of Flank Wear (mm) | | | Type | | Width of Flank Wear (mm) | | |
|---|---|---|---|---|---|---|---|---|---|
| | | Cutting conditions 2-A | Cutting conditions 2-B | Cutting conditions 2-C | | | Cutting conditions 2-A | Cutting conditions 2-B | Cutting conditions 2-C |
| Cutting inserts of present invention | 2-1 | 0.09 | 0.20 | 0.20 | Conventional cutting inserts | 2-1 | 0.34 | 0.40 | 0.49 |
| | 2-2 | 0.10 | 0.17 | 0.21 | | 2-2 | 0.34 | 0.36 | 0.45 |
| | 2-3 | 0.11 | 0.16 | 0.21 | | 2-3 | 0.36 | 0.41 | 0.49 |
| | 2-4 | 0.11 | 0.16 | 0.21 | | 2-4 | 0.35 | 0.37 | 0.47 |
| | 2-5 | 0.10 | 0.17 | 0.19 | | 2-5 | 0.35 | 0.40 | 0.46 |
| | 2-6 | 0.09 | 0.16 | 0.21 | | 2-6 | 0.37 | 0.42 | 0.49 |
| | 2-7 | 0.09 | 0.18 | 0.22 | | 2-7 | 0.34 | 0.39 | 0.44 |
| | 2-8 | 0.11 | 0.20 | 0.19 | | 2-8 | 0.36 | 0.38 | 0.46 |
| | 2-9 | 0.13 | 0.16 | 0.20 | | 2-9 | 0.34 | 0.43 | 0.49 |
| | 2-10 | 0.11 | 0.19 | 0.20 | | 2-10 | 0.33 | 0.36 | 0.44 |
| | 2-11 | 0.10 | 0.18 | 0.22 | | 2-11 | 0.34 | 0.43 | 0.47 |
| | 2-12 | 0.11 | 0.17 | 0.21 | | 2-12 | 0.34 | 0.40 | 0.46 |
| | 2-13 | 0.09 | 0.18 | 0.20 | | 2-13 | 0.38 | 0.41 | 0.48 |
| | 2-14 | 0.09 | 0.19 | 0.22 | | 2-14 | 0.34 | 0.38 | 0.49 |
| | 2-15 | 0.12 | 0.17 | 0.18 | | 2-14 | 0.33 | 0.37 | 0.44 |

EP 1 892 052 B1

Based on the results shown in Tables 6 to 10, in all of the cutting inserts 2-1 to 2-15 of the present invention, the binding phase of the TiCN-based cermet making up these cutting inserts contained W at a high ratio of 40 to 60% as the ratio in the binding phase; thereby, the cutting inserts were provided with superior high-temperature hardness, as a result, the cutting inserts were determined to demonstrate superior wear resistance even during high-temperature cutting accompanying generation of high levels of heat. In contrast, in the conventional cutting inserts 2-1 to 2-15, the ratio of W contained in the binding phase was low at 1 to 10% as the ratio in the binding phase in all of these cutting inserts. As a result, the binding phase cannot be expected to demonstrate superior high-temperature hardness. Consequently, it is clear that progression of wear of the binding phase is accelerated particularly during high-speed cutting, thereby leading to a comparatively short service life.

As has been described above, a cutting insert of the present invention demonstrates superior wear resistance not only during cutting under ordinary conditions such as when cutting various types of steel and cast iron, but also during high-speed cutting accompanying the generation of high levels of heat. Consequently, this cutting insert is able to adequately accommodate conservation of power, conservation of energy and reduction of costs.

(Example 3; not belonging to the invention)

The following provides a more detailed explanation of the cermet insert (to be simply referred to as a cutting insert) and the cutting tool of the third embodiment through an example thereof.

First, $TiC_{0.5}N_{0.5}$ powder having a mean particle diameter of 0.5 to 2 $\mu$m, $TiC_{0.3}N_{0.7}$ powder having a mean particle diameter of 0.5 to 2 $\mu$m, WC powder having a mean particle diameter of 1 to 2 $\mu$m, TaC powder having a mean particle diameter of 1 to 2 $\mu$m, NbC powder having a mean particle diameter of 1 to 2 $\mu$m, Co powder having a mean particle diameter of 2 to 3 $\mu$m, and Ni powder having a mean particle diameter of 2 to 3 $\mu$m were prepared. These raw material powders were blended in the blended compositions shown in Table 11 to prepare four types of mixed powders consisting of 3-A to 3-D.

Table 11

| Composition | Blended Composition (mass%) | | | | | | |
|---|---|---|---|---|---|---|---|
| | $TiC_{0.5}N_{0.5}$ | $TiC_{0.3}N_{0.7}$ | WC | TaC | NbC | Co | Ni |
| 3-A | 25 | 25 | 28 | - | 5 | 8 | 9 |
| 3-B | 25 | 25 | 28 | 10 | - | 6 | 6 |
| 3-C | 30 | 30 | 20 | - | 6 | 7 | 7 |
| 3-D | 35 | 20 | 25 | - | 6 | 7 | 7 |

Each of the mixed powders of 3-A to 3-D was respectively wet-mixed for 24 hours in alcohol with a ball mill and then dried.

The dried powders were pressed into compacts at a pressure of 98 MPa.

Next, the compacts were sintered under the following conditions (a) to (e) as shown in FIG. 7.

(a) The temperature was raised from room temperature to 1200°C at the rate of 10°C/min. in a vacuum atmosphere (V) at 10 Pa or less.

(b) After having raised the temperature to 1200°C (intermediate temperature: a temperature of 1200 to 1250°C can be adopted for the intermediate temperature), alternately changing atmosphere treatment was carried out by repeatedly alternating between holding in an Ar atmosphere for a short period of time which includes holding for 2 minutes in an Ar atmosphere at 35 kPa, and holding in a vacuum atmosphere for a short period of time which includes holding for 15 minutes in a vacuum atmosphere at 10 Pa or less.

(c) After the aforementioned alternately changing atmosphere treatment, the temperature was raised to 1350°C at the rate of 2°C/min in a vacuum atmosphere at 10 Pa or less.

(d) The temperature was raised from 1350°C to a predetermined sintering temperature (1500°C) at the rate of 2°C/min, and then the temperature was held at the aforementioned sintering temperature for 60 minutes. Raising the temperature to the sintering temperature and holding at the sintering temperature were carried out in a nitrogen atmosphere at 1.3 kPa.

(e) Cooling of the furnace from the aforementioned sintering temperature was carried out in an Ar atmosphere at 90 kPa or less.

After sintering under conditions including the aforementioned steps (a) to (e), inserts 1 were produced in the shape of an ISO standard SNGN120408 tip by polishing.

Namely, inserts of sample nos. 3-1 to 3-4 corresponding to the four types of the mixed powders were respectively produced as shown in the following Table 12.

In addition, comparative example inserts (sample nos. 3-5 to 3-7) were respectively produced under substantially the same conditions with the exception of adopting different intermediate temperatures as indicated in the following Table 12.

Table 12

|  | Sample No. | Composition | Intermediate Temperature (°C) |
|---|---|---|---|
| Examples of the third embodiment, not belonging to the invention | 3-1 | 3-A | 1200 |
|  | 3-2 | 3-B | 1200 |
|  | 3-3 | 3-C | 1250 |
|  | 3-4 | 3-D | 1250 |
| Comparative Examples | 3-5 | 3-B | 1300 |
|  | 3-6 | 3-C | 1350 |
|  | 3-7 | 3-D | 1350 |

The following provides an explanation of compositional analyses and cutting evaluations carried out on the inserts of sample nos. 3-1 to 3-4 and the inserts of sample nos. 3-5 to 3-7 of the comparative examples produced in accordance with the production method described above.

(1) Compositional Analyses

Quantitative determination was carried out on the components (elements) contained in each of the inserts (sintered bodies) of sample nos. 3-1 to 3-4 and sample nos. 3-5 to 3-7 of the comparative examples. The amounts of these components were also determined as compounds thereof. Those results are shown in Tables 13 and 14.

Table 13

|  | Sample No. | Blend | Insert (Sintered Body) Element Composition (mass%) | | | | | |
|---|---|---|---|---|---|---|---|---|
|  |  |  | Ti | W | Ta | Nb | Co | Ni |
| Examples of the third embodiment, not belonging to the invention | 3-1 | 3-A | 44 | 35 |  | 5 | 8 | 8 |
|  | 3-2 | 3-B | 47 | 32 | 9 |  | 6 | 6 |
|  | 3-3 | 3-C | 53 | 28 | - | 6 | 6 | 7 |
|  | 3-4 | 3-D | 48 | 32 | - | 6 | 7 | 7 |
| Comparative Examples | 3-5 | 3-B | 47 | 30 | 11 | - | 6 | 6 |
|  | 3-6 | 3-C | 56 | 26 | - | 5 | 6 | 7 |
|  | 3-7 | 3-D | 52 | 30 | - | 5 | 6 | 7 |

Table 14

| | Sample No. | Blend | Insert (Sintered Body) Element Composition Converted as Compounds (mass%) | | | | | |
| --- | --- | --- | --- | --- | --- | --- | --- | --- |
| | | | TiCN | WC | TaC | NbC | Co | Ni |
| Examples of the third embodiment, not belonging to the invention | 3-1 | 3-A | 49 | 32 | - | 5 | 7 | 7 |
| | 3-2 | 3-B | 52 | 30 | 8 | - | 5 | 5 |
| | 3-3 | 3-C | 58 | 25 | - | 6 | 5 | 6 |
| | 3-4 | 3-D | 53 | 29 | - | 6 | 6 | 6 |
| Comparative Examples | 3-5 | 3-B | 50 | 30 | 10 | - | 5 | 5 |
| | 3-6 | 3-C | 60 | 24 | - | 5 | 5 | 6 |
| | 3-7 | 3-D | 54 | 30 | - | 5 | 5 | 6 |

In addition, the compositions of the binding phases of the inserts were analyzed by STEM (scanning transmission electron microscopy) analysis and EDS. Those results are shown in the following Table 15.

Table 15

| | Sample No. | Blend | Binding Phase Element Composition Converted as Compounds (mass%) | | | | | |
| --- | --- | --- | --- | --- | --- | --- | --- | --- |
| | | | Ti/Impurities | W | Ta | Nb | Co | Ni |
| Examples of the third embodiment, not belonging to the invention | 3-1 | 3-A | 1 | 53 | - | 1 | 22 | 23 |
| | 3-2 | 3-B | 1 | 49 | 1 | - | 24 | 25 |
| | 3-3 | 3-C | 1 | 44 | - | 1 | 27 | 27 |
| | 3-4 | 3-D | 1 | 48 | - | 1 | 25 | 25 |
| Comparative Examples | 3-5 | 3-B | 1 | 59 | 1 | - | 19 | 20 |
| | 3-6 | 3-C | 1 | 54 | - | 1 | 22 | 22 |
| | 3-7 | 3-D | 1 | 59 | - | 1 | 19 | 20 |

Moreover, W content was also determined. Those results are shown in the following Table 16.

Here, the amount of W in the binding phase based on the entire cermet (entire sintered body), the amount of W in the hard phase based on the entire cermet, and the amount of W in the binding phase based on the total amount of W can be respectively determined using the following equations (1) to (3). Furthermore, the amount of elementary W (mass%) rather than the amount of W converted as W compounds was used to calculate the amounts of W.

```
Amount of W in binding phase (mass%)

= (W in binding phase composition) × (Co + Ni in sintered

body composition)/(Co + Ni in binding phase composition) ··· (1)

Amount of W in hard phase (mass%)

= (Amount of W in sintered body) - (Amount of W in binding

phase) ··· (2)
```

**EP 1 892 052 B1**

Amount of W in binding phase based on total amount of W

= (Amount of W in binding phase)/(Total amount of W) ⋯ (3)

Table 16

| | Sample No. | Blend | W (mass%) | | Content ratio of W in binding phase/hard phase (%) | |
|---|---|---|---|---|---|---|
| | | | Eq. (1) Amount of W in binding phase based on entire insert | Eq. (2) Amount of W in hard phase based on entire insert | Eq. (3) Amount of W in binding phase based on total amount of W | Amount of W in hard phase based on total amount of W |
| Examples of the third embodiment, not belonging to the invention | 3-1 | 3-A | 19 | 16 | 54 | 46 |
| | 3-2 | 3-B | 12 | 20 | 38 | 62 |
| | 3-3 | 3-C | 11 | 17 | 38 | 62 |
| | 3-4 | 3-D | 13 | 19 | 42 | 58 |
| Comparative Examples | 3-5 | 3-B | 18 | 12 | 61 | 39 |
| | 3-6 | 3-C | 16 | 10 | 61 | 39 |
| | 3-7 | 3-D | 20 | 10 | 66 | 34 |

(2) Breakage Resistance Test

Each sample insert was bolted to the end of a steel shank tool holder (holder) with a fixture to obtain cutting tools.
A dry, intermittent high-speed cutting test of alloy steel was then carried out under the cutting conditions shown in the following Table 17 using these cutting tools. Furthermore, a breakage resistance test was carried out using 20 of the same types of inserts.
The cumulative breakage ratio after 700 impacts (ratio of the number of inserts in which breakage occurred after 700 times) was investigated. Those results are shown in the following Table 18.

(3) Wear Resistance Test

Each sample insert was bolted to the end of a steel shank tool holder (holder) with a fixture to obtain cutting tools.
A dry, intermittent high-speed cutting test of alloy steel was then carried out under the cutting conditions shown in the following Table 17 using these cutting tools.
The width of flank wear (amount of wear $V_B$) after cutting for 4 minutes was measured. Those results are shown in the following Table 18.

Table 17

| Cutting Conditions | Units | Breakage Resistance Test | Wear Resistance Test |
|---|---|---|---|
| | | Cumulative breakage ratio after 700 impacts | Amount of wear $V_B$ after 4 minutes of cutting |
| Cutting speed | (m/min) | 200 | 300 |
| Feed rate (f) | (mm/rev) | 0.25 | 0.15 |
| Depth of cut | (mm) | 1.5 | 1.5 |
| Wet/Dry | | Wet | Wet |
| No. of impacts | (Times) | 700 | - |
| Cutting time | (min) | - | 4 |

(continued)

| Cutting Conditions | Units | Breakage Resistance Test | Wear Resistance Test |
|---|---|---|---|
| | | Cumulative breakage ratio after 700 impacts | Amount of wear $V_B$ after 4 minutes of cutting |
| Tip shape | | SNGN120408 | SNGN120408 |
| Cut material | | SNCM439 ($\phi$ 200 mm round bar: 4 slits at equal intervals in axial direction) | SNCM439 ($\phi$ 200 mm round bar) |

Table 18

| | Sample No. | Composition | Intermediate Temperature (°C) | Cutting Evaluation | |
|---|---|---|---|---|---|
| | | | | Cumulative breakage ratio (%) | Amount of Wear $V_B$ (mm) |
| Examples of the third embodiment, not belonging to the invention | 3-1 | 3-A | 1200 | 25 | 0.11 |
| | 3-2 | 3-B | 1200 | 15 | 0.09 |
| | 3-3 | 3-C | 1250 | 20 | 0.10 |
| | 3-4 | 3-D | 1250 | 15 | 0.10 |
| Comparative Examples | 3-5 | 3-B | 1300 | 35 | 0.09 |
| | 3-6 | 3-C | 1350 | 40 | 0.10 |
| | 3-7 | 3-D | 1350 | 35 | 0.11 |

of the third embodiment

As is clear from Tables 11 to 18, in the inserts of the third embodiment, in particular, 40 to 65 mass% of the W contained in the insert are contained in the hard phase, and the balance of the W is contained in the binding phase. Consequently, the inserts have the remarkable effect of being able to realize both high wear resistance and breakage resistance.

INDUSTRIAL APPLICABILITY

Since the insert of the present invention including titanium carbonitride-based cermet demonstrates superior wear resistance during high-speed cutting accompanying generation of high levels of heat, it is used in various types of turning. In addition, since the cermet insert and the cutting tool of the present invention are also able to realize high breakage resistance together with being able to maintain a high level of wear resistance, they are used in various types of turning.

**Claims**

1. A titanium carbonitride-based cermet insert containing a titanium carbonitride-based cermet,
   which is a sintered body of a compact having a blended composition comprising, by mass%, at least:

      20 to 30% of tungsten carbide;
      5 to 10% of at least one of tantalum carbide and niobium carbide;
      5 to 10% of Co;
      5 to 10% of Ni; and
      50 to 60% of titanium carbonitride,

   having a microstructure comprising 75 to 90 area% of a hard phase and the balance as a binding phase,
   wherein the hard phase comprises:

(1) a first hard phase having a core-having structure in which a core portion consists of a titanium carbonitride phase, and a peripheral portion consists of a complex carbonitride phase having Ti, W, and at least one of Ta and Nb (to be referred to as (Tl, W, Ta/Nb)CN);
(2) a second hard phase having a core-having structure in which both a core portion and a peripheral portion consist of (Ti, W, Ta/Nb)CN phases; and
(3) a third hard phase having a single phase structure consisting of a titanium carbonitride phase, and the binding phase consists of a W-Co-Ni-based alloy having a composition comprising, as a ratio in the binding phase and by mass%, at least:

    18 to 33 mass% of Co;
    20 to 35 mass% of Ni; and

Ti and at least one of Ta and Nb, the total amount thereof is 5 mass% or less;
or
which is a sintered body of a compact having a blended composition comprising, by mass%, at least:

    20 to 30% of tungsten carbide;
    5 to 10% of at least one of tantalum carbide and niobium carbide;
    1 to 5% of at least one of zirconium carbide, vanadium carbide and molybdenum carbide;
    5 to 10% of Co;
    5 to 10% of Ni; and
    50 to 60% of titanium carbonitride,

having a microstructure comprising 75 to 93 area% of a hard phase and the balance as a binding phase, wherein the hard phase comprises:

(1) a first hard phase having a core-having structure in which a core portion consists of a titanium carbonitride phase, and a peripheral portion consists of a complex carbonitride phase having Ti, W, at least one of Ta and Nb, and at least one of Zr, V and Mo (to be referred to as (Ti, W, Ta/Nb, Zr/V/Mo)CN);
(2) a second hard phase having a core-having structure In which both a core portion and a peripheral portion consist of (Ti, W, Ta/Nb, Zr/V/Mo)CN phases; and
(3) a third hard phase having a single phase structure consisting of a titanium carbonitride phase, and

the binding phase consists of a W-Co-Ni-based alloy having a composition comprising, as a ratio in the binding phase and by mass%, at least:

    18 to 33 mass% of Co;
    20 to 35 mass% of Ni; and

Ti, at least one of Ta and Nb, and at least one of Zr, V and Mo, the total amount thereof is 5 mass% or less; and which is **characterized in that** the binding phase comprises 40 to 60 mass% of W.

2.  A cutting tool comprising a holder and the cermet insert according to claim 1 held and fixed by the holder.

**Patentansprüche**

1.  Ein Titancarbonitrid-basierter Cermet-Einsatz, enthaltend ein Titancarbonitridbasiertes Cermet, welches ein Sinterkörper eines Formteils ist, mit einer Blend-Zusammensetzung enthaltend, in Massen-%, mindestens:

    20 bis 30 % Wolframcarbid;
    5 bis 10 % mindestens eines von Tantalcarbid und Niobcarbid;
    5 bis 10 % Co;
    5 bis 10 % Ni; und
    50 bis 60 % Titancarbonitrid,

mit einer Mikrostruktur, enthaltend 75 bis 90 Flächen-% einer Hartphase und der Rest als eine Bindephase,

worin die Hartphase enthält:

(1) eine erste Hartphase mit einer Kern-Struktur, worin ein Kernabschnitt aus einer Titancarbonitrid-Phase besteht, und ein peripherer Abschnitt aus einer komplexen Carbonitrid-Phase mit Ti, W und mindestens einem von Ta und Nb (bezeichnet als (Ti, W, Ta/Nb)CN) besteht;
(2) eine zweite Hartphase mit einer Kern-Struktur, worin sowohl ein Kernabschnitt als auch ein peripherer Abschnitt aus (Ti, W, Ta/Nb)CN Phasen bestehen; und
(3) eine dritte Hartphase mit einer einzigen Phasenstruktur bestehend aus einer Titancarbonitrid-Phase, und

worin die Bindephase aus einer W-Co-Ni-basierten Legierung besteht, mit einer Zusammensetzung enthaltend, als Anteil in der Bindephase und in Massen-%, mindestens
18 bis 33 Massen-% Co;
20 bis 35 Massen-% Ni; und
Ti und mindestens eines von Ta und Nb, wobei die Gesamtmenge davon 5 Massen-% oder weniger beträgt;
oder
welches ein Sinterkörper aus einem Kompakt ist, mit einer Blend-Zusammensetzung enthaltend, in Massen-%, mindestens:

20 bis 30 % Wolframcarbid;
5 bis 10 % mindestens eines von Tantalcarbid und Niobcarbid;
1 bis 5 % mindestens eines von Zirkoniumcarbid, Vanadiumcarbid und Molybdäncarbid;
5 bis 10 % Co;
5 bis 10 % Ni; und
50 bis 60 % Titancarbonitrid,

mit einer Mikrostruktur, enthaltend 75 bis 93 Flächen-% einer Hartphase und der Rest als eine Bindephase, worin die Hartphase enthält:

(1) eine erste Hartphase mit einer Kern-Struktur, worin ein Kernabschnitt aus einer Titancarbonitrid-Phase besteht, und ein peripherer Abschnitt aus einer komplexen Carbonitrid-Phase mit Ti, W und mindestens einem von Ta und Nb, und mindestens einem von Zr, V und Mo (bezeichnet als (Ti, W, Ta/Nb, Zr/V/Mo)CN) besteht;
(2) eine zweite Hartphase mit einer Kern-Struktur, worin sowohl ein Kernabschnitt als auch ein peripherer Abschnitt aus (Ti, W, Ta/Nb, Zr/V/Mo)CN Phasen bestehen; und
(3) eine dritte Hartphase mit einer einzigen Phasenstruktur bestehend aus einer Titancarbonitrid-Phase, und

worin die Bindephase aus einer W-Co-Ni-basierten Legierung besteht, mit einer Zusammensetzung enthaltend, als Anteil in der Bindephase und in Massen-%, mindestens

18 bis 33 Massen-% Co;
20 bis 35 Massen-% Ni; und

Ti, mindestens eines von Ta und Nb, und mindestens eines von Zr, V und Mo, wobei die Gesamtmenge davon 5 Massen-% oder weniger beträgt; und welches **dadurch gekennzeichnet ist, dass** die Bindephase 40 bis 60 Massen-% enthält.

2. Ein Schneidwerkzeug, umfassend einen Halter und den Cermet-Einsatz gemäß Anspruch 1, der von dem Halter gehalten und fixiert wird.

**Revendications**

1. Bâtonnet en cermet à base de carbonitrure de titane contenant un cermet à base de carbonitrure de titane, qui est un corps fritté d'un compact ayant une composition mélangée comprenant, en % en masse, au moins :

20 à 30 % de carbure de tungstène ;
5 à 10 % d'au moins un du carbure de tantale et du carbure de nobium ;
5 à 10 % de Co ;
5 à 10 % de Ni ; et

50 à 60 % de carbonitrure de titane,

ayant une microstructure comprenant 75 à 90 % de surface d'une phase dure et le reste comme phase de liaison, dans lequel la phase dure comprend :

(1) une première phase dure ayant une structure avec un coeur dans laquelle une partie de coeur est constituée d'une phase de carbonitrure de titane, et une partie périphérique est constituée d'une phase de carbonitrure complexe ayant Ti, W et au moins un de Ta et Nb (à être rapporté comme [Ti, W, Ta/Nb)CN] :
(2) une deuxième phase dure ayant une structure avec un coeur dans laquelle les deux une partie de coeur et une partie périphérique sont constituées de phases (Ti, W, Ta/Nb)CN ; et
(3) une troisième phase dure ayant une simple structure de phase constituée d'une phase de carbonitrure de titane, et

la phase de liaison est constituée d'un alliage à base de W-Co-Ni ayant une composition comprenant, comme rapport dans la phase de liaison et en % en masse, au moins :

18 à 33 % en masse de Co ;
20 à 35 % en masse de Ni ; et

Ti et au moins un de Ta et Nb, la quantité en masse de ceux-ci étant de 5 % en masse ou moins ;
ou
qui est un corps fritté d'un compact ayant une composition mélangée comprenant, en % en masse, au moins :

20 à 30 % de carbure de tungstène ;
5 à 10 % d'au moins un du carbure de tantale et du carbure de nobium ;
1 à 5 % d'au moins un du carbure de zirconium, du carbure de vanadium et du carbure de molybdène ;
5 à 10 % de Co ;
5 à 10 % de Ni ; et
50 à 60 % de carbonitrure de titane,

ayant une microstructure comprenant 75 à 93 % de % de surface d'une phase dure et le reste comme phase de liaison, dans lequel la phase dure comprend :

(1) une première phase dure ayant une structure avec un coeur dans laquelle une partie de coeur est constituée d'une phase de carbonitrure de titane, et une partie périphérique est constituée d'une phase de carbonitrure complexe ayant Ti, W, au moins un de Ta et Nb et au moins un de Zr, V et Mo (à être rapporté comme (Ti, W, Ta/Nb, Zr/V/Mo)CN] ;
(2) une deuxième phase dure ayant une structure avec un coeur dans laquelle les deux une partie de coeur et une partie périphérique sont constituées des phases (Ti, W, Ta/Nb, Zr/V/Mo)CN ; et
(3) une troisième phase dure ayant une simple structure de phase constituée d'une phase de carbonitrure de titane, et

la phase de liaison est constituée d'un alliage à base de W-Co-Ni ayant une composition comprenant, comme rapport dans la phase de liaison et en % en masse, au moins :

18 à 33 % en masse de Co ;
20 à 35 % en masse de Ni ; et

Ti, au moins un de Ta et Nb et au moins un de Zr, V et Mo, la quantité totale de ceux-ci étant de 5 % en masse ou moins ; et
qui est **caractérisé en ce que** la phase de liaison comprend 40 à 60 % en masse de W.

2. Outil de coupe comprenant un support et le bâtonnet de cermet selon la revendication 1 maintenu et fixé par le support.

# FIG. 1

11, 21

FIG. 2

# FIG. 3

FIRST HARD PHASE

THIRD HARD PHASE (TiCN PHASE)

TiCN

(Ti,W,Ta/Nb,Zr/V/Mo)CN

(Ti,W,Ta/Nb,Zr/V/Mo)CN

(Ti,W,Ta/Nb,Zr/V/Mo)CN

(Ti,W,Ta/Nb,Zr/V/Mo)CN

(Ti,W,Ta/Nb,Zr/V/Mo)CN

THIRD HARD PHASE (TiCN PHASE)

SECOND HARD PHASE    TiCN    (Ti,W,Ta/Nb,Zr/V/Mo)CN

EP 1 892 052 B1

# FIG. 4A

CERMET MICROSTRUCTURE

BINDING PHASE

# FIG. 4B

CORE PORTION
PERIPHERAL PORTION    TiCN

FIRST HARD PHASE

(Ti,Nb/Ta,W)CN

CORE PORTION

(Ti,Nb/Ta,W)CN

SECOND HARD PHASE

PERIPHERAL PORTION

TiCN

THIRD HARD PHASE

# FIG. 5

# FIG. 6

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005173463 A
- JP 2005259169 A
- JP 2005259170 A
- JP 2005259171 A
- JP 2005303095 A
- JP 2005303096 A
- JP 2004292842 A
- JP H10110234 B
- JP S62170452 B